# EUROPÄISCHE PATENTSCHRIFT

(11) **EP 4 241 637 B1**
(45) Veröffentlichungstag und Bekanntmachung des Hinweises auf die Patenterteilung: **07.05.2025**
(21) Anmeldenummer: 22160540.5
(22) Anmeldetag: 07.03.2022
(51) Int. Cl.: A47J 43/07, A47J 43/046

(54) **GEFÄSSANORDNUNG FÜR EIN KÜCHENGERÄT**
CONTAINER ASSEMBLY FOR A KITCHEN APPLIANCE
DISPOSITIF RÉCIPIENT POUR UN ROBOT DE CUISINE

(43) Veröffentlichungstag der Anmeldung: 13.09.2023
(73) Patentinhaber: Vorwerk & Co. Interholding GmbH, 42275 Wuppertal (DE)
(72) Erfinder: Beckmann, Nils, 42853 Remscheid (DE)
(74) Vertreter: Cohausz & Florack

(56) Entgegenhaltungen:
- EP-A1- 3 666 140
- AU-A1- 2020 245 708
- US-A1- 2004 100 862
- US-A1- 2018 020 875

## Beschreibung

Die Anmeldung betrifft eine Gefäßanordnung für ein Küchengerät, umfassend ein Speiseaufnahmeelement und einen hierzu korrespondierenden Deckel. Darüber hinaus betrifft die Anmeldung ein Küchengerät und ein Verfahren.

Aus dem Stand der Technik sind Küchenmaschinen bekannt, die zum zumindest teilautomatischen Zubereiten von Speisen eingerichtet sind. Derartige Küchenmaschinen, aber auch andere Küchengeräte, können mindestens eine Gefäßanordnung umfassen. Eine Gefäßanordnung kann ein das Speiseaufnahmeelement beispielsweise in Form eines Topfs und mindestens einen Deckel umfassen. Der Deckel ist eingerichtet zum Verschließen bzw. Abdecken der Topföffnung des Speiseaufnahmeelements. Der Deckel kann auch weitere Funktionen ermöglichen bzw. dafür genutzt werden.

Insbesondere kann es für einen sicheren Betrieb eines Küchengeräts erforderlich sein, dass der Deckel mit dem Speiseaufnahmeelement in einer bestimmten Betriebsposition ist, insbesondere verriegelt werden kann. Aus dem Stand der Technik ist es daher bekannt, dass ein Deckel relativ zu einem Speiseaufnahmeelement von einer ersten Betriebsposition, wie eine unverriegelte Betriebsposition, in eine zweite Betriebsposition, wie eine verriegelte Betriebsposition, bewegbar ist. Beispielsweise kann der Nutzer den Deckel entsprechend bewegen oder das Küchengerät kann einen Deckelantrieb umfassen, eingerichtet zum (automatischen) Verfahren eines Deckels zumindest zwischen der unverriegelten Position und der verriegelten Position.

Die Durchführung einer bestimmten Küchengerätefunktion durch ein Küchengerät ist regelmäßig nur dann zulässig, wenn sich ein Deckel auf dem Speiseaufnahmeelement in einer bestimmten Betriebsposition, insbesondere der verriegelten Position, befindet, also die Gefäßanordnung in einem zweiten Betriebszustand ist, insbesondere dem Verriegelungszustand.

Zum Erkennen bzw. Erfassen eines Verriegelungszustands einer Gefäßanordnung ist es aus dem (internen) Stand der Technik bekannt, Mikroschalter einzusetzen. Beispielsweise kann eine Erkennung der Verriegelungsposition des Deckels durch Abfrage der Position von Verriegelungswalzen des Speiseaufnahmeelements/Deckels über Mikroschalter in Kombination mit einer Auswertung des Strombedarfs des Deckelantriebs erfolgen. Zusätzlich kommt in der Regel noch ein Mikroschalter zum Einsatz, der durch einen verriegelten Deckel betätigt werden muss.

Ferner sind aus dem Stand der Technik Konzepte bekannt, die ebenfalls über elektrische Schalter einen in der Verriegelungsposition befindlichen Deckel detektieren. Ein solcher elektrischer Schalter wird je nach Küchengerät direkt durch den Deckel oder indirekt über mechanische Stößel, Hebel oder ähnliches betätigt.

Diese Detektionsmechanismen haben jedoch verschiedenste Nachteile. Insbesondere ist der Aufwand einer Implementierung aufwendig. Dies gilt besonders für den Fall, wenn das Küchengerät eine Mehrzahl von Gefäßanordnungen und/oder die Gefäßanordnung eine Mehrzahl von Deckeln umfasst.

Um bei den bekannten Detektionsmechanismen die Verriegelungsinformation von einem Deckelbereich zu einer in einer Gerätebasis angeordneten Detektionseinrichtung zu übertragen, muss ein Übertragungspfad vorgesehen sein, der die Verriegelungsinformation an die entsprechende Einkopplungsstelle der Gerätebasis überträgt. Ferner muss die Verriegelungsinformation in Form eines oder mehrerer elektrischer Signale bereitgestellt werden, damit die Detektionseinrichtung diese Information auswerten kann, um den Verriegelungszustand detektieren zu können.

Die verschiedenen, bekannten Detektionsmechanismen können im Wesentlichen in zwei Gruppen eingeteilt werden. Die Einteilung kann insbesondere davon abhängen, an welcher Stelle des Küchengeräts das elektrische Signal generiert wird, welches die Verriegelungsinformation (d.h. insbesondere: Deckel ist in der Verriegelungsposition) enthält und/oder diese repräsentiert.

Bei der ersten Gruppe wird die Verriegelungsinformation zwischen der Gefäßanordnung und der Gerätebasis des Küchengeräts auf mechanischem Weg übertragen. Die Umwandlung in ein elektrisches Signal erfolgt erst in der Gerätebasis.

Ein entsprechender Detektionsmechanismus ist, insbesondere bei verschiedenen Topf- bzw. Speiseaufnahmeelementdurchmessern, mit der Herausforderung verbunden, die mechanische Bewegung an die richtige Position der Gerätebasis zu übertragen. Die hierzu erforderlichen mechanischen Übertragungselemente unterliegen aufgrund der bewegten Teile einem hohen Verschmutzungsrisiko. In besonders ungünstigen Fällen kann eine Verschmutzung zu einem Klemmen und/oder Blockieren des mechanischen Mechanismus führen. Dies wiederum kann zu einer fehlerhaften Verriegelungsdetektion führen.

Hinzu kommt, dass die Reinigung des mechanischen Mechanismus Schwierigkeiten bereiten kann, insbesondere wenn aus Bauraumgründen filigrane, mechanische Strukturen zum Einsatz kommen.

Soll neben dem Verriegelungszustand der Gefäßanordnung zusätzlich eine Möglichkeit bereitgestellt werden, den Deckeltyp aus einer Mehrzahl von möglichen unterschiedlichen Deckeltypen zu bestimmen (z.B. bei mehreren unterschiedlichen Deckeln pro Topf), so muss das Erkennungssignal in geeigneter Weise codierbar sein.

Bei einer mechanischen Abtastung des Deckels führt dies zu einem deutlichen Zusatzaufwand. Grund hierfür ist insbesondere, dass zur Übermittlung der Zusatzinformation entweder die Signalanzahl erhöht werden muss (was zusätzliche mechanische Übertragungsmechanismen erfordert) oder eine mechanische Bewegung eines Elementes des mechanischen Mechanismus detaillierter ausgewertet werden muss (z.B. unterschiedliche Stößelhübe je nach Deckeltyp).

Abhängig von der Ausführung bringen mechanische Übertragungselemente auch ein erhöhtes Manipulationsrisiko mit sich. So können die entsprechenden Schalter und/oder Mechaniken von einem Nutzer manuell betätigt werden, um eine Verriegelung vorzutäuschen. Um dies zu verhindern, sind zusätzliche mechanische Strukturen erforderlich. Dies wiederum erschwert die Reinigung noch weiter und erhöht zudem den Implementierungsaufwand.

Bei der zweiten Gruppe wird der Verriegelungszustand des Deckels zwischen der Gefäßanordnung und der Gerätebasis elektrisch übertragen. Anders ausgedrückt, die Wandlung in ein elektrisches Signal erfolgt bereits an der Gefäßanordnung. Aufgrund der Umgebungsbedingungen (z.B. Feuchtigkeit, Schmutz, Temperatur, Spülmaschinenumgebung), denen eine Gefäßanordnung regelmäßig ausgesetzt ist, ist ein Abtasten des Deckels mit Hilfe von Mikroschaltern problematisch. Grund hierfür ist, dass die Mikroschalter eine Abdichtung benötigen. Dies führt zu einem erhöhten Implementierungsaufwand. Zudem handelt es sich bei einer Abdichtung um ein Verschleißelement. Ein Verschleiß kann sich insbesondere negativ auf die Lebensdauer der Gefäßanordnung auswirken.

Die Druckschrift AU 2020 245 708 A1 offenbart eine Küchenvorrichtung, umfassend eine Basis mit einem mit elektrischer Leistung betriebenen Mechanismus zur Verarbeitung von Lebensmitteln, ein abnehmbares Gefäß, einen Deckel, der abnehmbar mit dem Rand des Gefäß koppelbar ist, um die Öffnung zumindest teilweise zu verschließen, und ein Verriegelungssystem, das mit dem Mechanismus verbunden ist, um die Abgabe der elektrischen Energie an den Mechanismus zu ermöglichen, wobei das System einen ersten Verriegelungskreis und einen zweiten Verriegelungskreis umfasst, wobei die Abgabe der elektrischen Energie an den Mechanismus durch Schließung des ersten Verriegelungskreises und die Aktivierung des zweiten Verriegelungskreises ermöglicht wird, wobei der erste Verriegelungskreis eine erste Kupplung umfasst, um den ersten Kreis zu schließen, wobei die erste Kupplung einen ersten Abschnitt aufweist, der an dem Deckel angebracht ist, und einen zweiten Abschnitt, der an dem Gefäß angrenzend an den Rand montiert ist, so dass der erste Abschnitt angrenzend an den zweiten Abschnitt angeordnet ist, wenn der Deckel mit dem Rand verbunden ist, wodurch der erste Kreis geschlossen wird, und wobei der zweite Verriegelungskreis eine zweite Kupplung zum Aktivieren des zweiten Verriegelungskreises umfasst, wobei die zweite Kupplung einen ersten Abschnitt umfasst, der Teil des zweiten Verriegelungskreises ist und an der Basis angebracht ist, wobei der erste Abschnitt betriebsmäßig mit einem zweiten Abschnitt verbunden ist, der an dem Behälter angebracht ist und Teil des ersten Verriegelungskreises ist, wobei die Schließung des ersten Verriegelungskreises die Betätigung des zweiten Abschnitts der zweiten Kupplung bewirkt, wodurch die Betätigung des ersten Abschnitts der zweiten Kupplung bewirkt wird, um somit die zweite Verriegelungsschaltung zu aktivieren und die Abgabe der elektrischen Leistung an den Mechanismus zu ermöglichen.

Die beschriebenen Detektionsmechanismen weisen somit Nachteile in den Bereichen Robustheit, Komplexität und/oder Bauraum auf.

Daher liegt der Anmeldung die Aufgabe zugrunde, eine Möglichkeit zur Detektion eines zweiten Betriebszustands, insbesondere eines Verriegelungszustands, bei einer Gefäßanordnung für ein Küchengerät bereitzustellen, welche robuster und/oder einfacher ausgebildet ist und/oder weniger Bauraum benötigt.

Diese Aufgabe wird gemäß einem ersten Aspekt der Anmeldung gelöst durch eine Gefäßanordnung für ein Küchengerät nach Anspruch 1. Die Gefäßanordnung umfasst ein Speiseaufnahmeelement. Die Gefäßanordnung umfasst mindestens einen Deckel, eingerichtet zum Verschließen einer Öffnung des Speiseaufnahmeelements. Der Deckel ist relativ zu dem Speiseaufnahmeelement zwischen einer ersten Betriebsposition und einer sich von der ersten Betriebsposition unterscheidenden Betriebsposition bewegbar. Der Deckel weist mindestens eine mit einem ersten Deckelkontakt und einem zweiten Deckelkontakt verbundene Leseantenne auf. Der Deckel weist mindestens einen in Reichweite der Leseantenne angeordneten Transponder auf. Das Speiseaufnahmeelement weist mindestens eine erste zwischen einem ersten oberen Topfkontakt und einem ersten unteren Topfkontakt verlaufende Topfverbindung und eine zweite zwischen einem zweiten oberen Topfkontakt und einem zweiten unteren Topfkontakt verlaufende Topfverbindung auf. Der erste untere Topfkontakt und der zweite untere Topfkontakt sind eingerichtet zum elektrischen Verbinden mit einer Lesesteuerung. Der erste Deckelkontakt und der zweite Deckelkontakt sind angeordnet, derart, dass eine elektrische Verbindung zwischen dem ersten Deckelkontakt und dem ersten oberen Topfkontakt und eine elektrische Verbindung zwischen dem zweiten Deckelkontakt und dem zweiten oberen Topfkontakt nur in der zweiten Betriebsposition hergestellt werden.

Im Gegensatz zum Stand der Technik wird anmeldungsgemäß eine Möglichkeit zur Detektion eines zweiten Betriebszustands, insbesondere eines Verriegelungszustands, eines Deckels einer Gefäßanordnung für ein Küchengerät bereitgestellt, welche robuster und einfacher ausgebildet ist und insbesondere weniger Bauraum benötigt, indem in dem Deckel sowohl eine Leseantenne als auch ein in Reichweite zu der Leseantenne und durch die Leseantenne auslesbarer Transponder angeordnet sind, wobei die Leseantenne nur dann mit einem Antennensignal baufschlagbar ist, wenn sich der Deckel in der zweiten Betriebsposition, insbesondere in der verriegelten Betriebsposition, befindet. Nur in der zweiten Betriebsposition des Deckels ist der Stromkreis zwischen Lesesteuerung und Leseantenne geschlossen.

Die anmeldungsgemäße Gefäßanordnung ist für eine Verwendung in einem Küchengerät eingerichtet. Das Küchengerät ist insbesondere eine Küchenmaschine, eingerichtet zum Zubereiten von Speisen. Das Zubereiten kann zumindest teilweise automatisiert erfolgen.

Die Gefäßanordnung umfasst mindestens ein Speiseaufnahmeelement und mindestens einen ersten zu dem Speiseaufnahmeelementstrukturell korrespondierenden Deckel. Dies meint insbesondere, dass eine (Topf-)Öffnung durch den ersten Deckel verschließbar bzw. abdeckbar ist und der Deckel insbesondere auf die Topföffnung auflegbar ist.

Ein Speiseaufnahmeelement ist insbesondere eingerichtet zum Aufnehmen von Speisen und vorzugsweise ein Topf, auch Kochtopf genannt, eine Pfanne, oder dergleichen. Insbesondere ist unter einem Speiseaufnahmeelement anmeldungsgemäß ein füllbares Gefäß bzw. ein füllbarer Behälter zu verstehen, welches/r zum Zubereiten von Speisen oder Getränken eingerichtet ist, insbesondere zum Garen oder Kochen von Warmspeisen.

Vorzugsweise korrespondiert das Speiseaufnahmeelement (strukturell) zu einer Gerätebasis des Küchengeräts. Das Speiseaufnahmeelement kann beispielswiese zumindest teilweise aus Kunststoff, zumindest teilweise aus Metall und/oder zumindest teilweise aus Glas gebildet sein.

Unter einem Deckel ist anmeldungsgemäß insbesondere ein Verschluss- und/oder Abdeckelement zu verstehen, mit der die Öffnung des Speiseaufnahmeelements zumindest teilweise (z.B. vollständig) verschließbar bzw. abdeckbar ist. Vollständig meint insbesondere, dass der Deckel ordnungsgemäß bzw. komplett auf der Öffnung des Speiseaufnahmeelements aufgelegt ist. Der Deckel kann wiederum eine eigene Deckelöffnung aufweisen, beispielsweise für eine Anordnung, insbesondere Kopplung, eines Zubehörteils, wie ein Messbecher oder dergleichen. Die weitere Deckelöffnung ist demnach verschließbar. Eine Öffnung des Speiseaufnahmeelements kann zumindest dann vollständig verschlossen sein, wenn ein Deckel ordnungsgemäß aufgelegt ist und in einer Deckelöffnung ein weiteres Zubehörteil ordnungsgemäß angeordnet ist. Es versteht sich, dass auch Deckel ohne Öffnungen oder mit anderen integrierten Funktionen verwendet werden können.

Der Deckel ist anmeldungsgemäß zumindest zwischen einer ersten Betriebsposition und einer zweiten Betriebsposition bewegbar. Die erste Betriebsposition kann eine Deckelposition sein, in der die Gefäßanordnung nicht betriebsbereit ist, und die zweite Betriebsposition kann eine Deckelposition sein, in der die Gefäßanordnung betriebsbereit ist. In der ersten Betriebsposition ist der Deckel insbesondere nicht betriebsbereit an bzw. auf dem Speiseaufnahmeelement positioniert. Der Deckel bzw. die Gefäßanordnung ist insbesondere in einem ersten Betriebszustand. In der zweiten Betriebsposition ist der Deckel insbesondere betriebsbereit an bzw. auf dem Speiseaufnahmeelement positioniert. Der Deckel bzw. die Gefäßanordnung ist insbesondere in einem zweiten Betriebszustand.

Vorzugsweise kann der Deckel mit dem Speiseaufnahmeelement verriegelt werden. Insbesondere ist der erste Deckel relativ zu dem Speiseaufnahmeelement zwischen einer unverriegelten Position und einer (definierten) verriegelten Position bewegbar. In der verriegelten Position befindet sich der Deckel bzw. die Gefäßanordnung in einem (mechanischen) Verriegelungszustand. Eine anmeldungsgemäße Verriegelung ist insbesondere eine mechanische Verriegelung bzw. Blockierung des Deckels.

Vorzugsweise kann die Gefäßanordnung mindestens einen (mechanischen) Verriegelungsmechanismus umfassen, eingerichtet zum Verriegeln des ersten Deckels mit dem Speiseaufnahmeelement in einer Verriegelungsposition bzw. verriegelten Position des Deckels. Beispielsweise kann die Verriegelung über mindestens ein an dem Speiseaufnahmeelement angeordnetes Klemmelement (z.B. Walze) (in bekannter Weise) hergestellt werden. Insbesondere kann eine Bajonette-Verriegelung vorgesehen sein. Es versteht sich, dass andere Verriegelungsmechanismen verwendet werden können.

Ein Deckel kann durch einen Deckelantrieb bzw. Verriegelungsaktor automatisch verfahrbar sein oder manuell durch eine Nutzeraktion von der ersten Betriebsposition in die (definierte) zweite Betriebsposition bewegbar sein.

Anmeldungsgemäß ist erkannt worden, dass in einfacher Weise ein zweiter Betriebszustand, insbesondere ein Verriegelungszustand, detektierbar ist, indem in oder an dem Deckel eine Leseantenne angeordnet ist, die nur dann mit elektrischer Energie versorgt werden kann bzw. nur dann mit einem Antennensignal beaufschlagt werden kann, wenn der Deckel in einer bestimmten (zweiten) Betriebsposition, insbesondere der verriegelten Betriebsposition, ist. Nur in der zweiten Betriebsposition des Deckels kann also die Leseantenne elektromagnetische Signale insbesondere in Form eines Lesefelds (auch Abfragefeld genannt) aussenden. Mit anderen Worten, ein in oder an dem Deckel angeordneter Transponder (auch als Tag bezeichnet) ist nur dann auslesbar durch die Leseantenne des Deckels, wenn der Deckel (ordnungsgemäß) an dem Speiseaufnahmeelement positioniert ist, insbesondere verriegelt ist.

Vorzugweise ist in dem Deckel ein System implementiert, dass aus einer Leseantenne und einem zu der Leseantenne korrespondierenden Transponder gebildet ist. Das System ist insbesondere ein RFID (radio-frequency identification) System. Die Leseantenne ist vorzugsweise eine RFID-basierte Leseantenne. Der Transponder ist vorzugsweise ein RFID-basierter Transponder bzw. RFID-Tag.

Der Transponder ist derart an bzw. in dem Deckel angeordnet, dass sich der Transponder in der (Lesefeld-)Reichweite der Leseantenne des Deckels befindet. Insbesondere meint dies, dass der Abstand des Transponders zu der Leseantenne und die geometrische Ausrichtung des Transponders zu der Leseantenne derart sind, dass der Transponder durch ein von der Leseantenne ausgesendetes Lesefeld (stets bzw. unter allen Umständen) auslesbar ist.

Der Deckel weist zwei Deckelkontakte auf, die jeweils mit der Leseantenne elektrisch verbunden sind. Hierüber kann die Leseantenne mit elektrischer Energie versorgt bzw. mit einem Antennensignal beaufschlagt werden.

Die beiden unteren Topfkontakte sind eingerichtet zum elektrischen Anschließen einer Lesesteuerung. Die Lesesteuerung kann vorzugsweise in einer Gerätebasis des Küchengeräts angeordnet sein. Bei anderen Ausführungsformen kann das Speiseaufnahmeelement, insbesondere der Topf, die Lesesteuerung (und damit insbesondere auch eine Detektionseinrichtung) zumindest teilweise umfassen. Die Lesesteuerung kann beispielsweise im Topf integriert sein, falls der Topf mit einer intelligenten Schnittstelle ausgestattet ist und in dem Topf ein entsprechender (kleiner) Controller integriert ist. In diesem Fall sind die unteren Topfkontakte insbesondere unmittelbar mit der Lesesteuerung verbunden.

Die Lesesteuerung kann eingerichtet sein zum Bereitstellen des Antennensignals. Insbesondere kann die Lesesteuerung das Antennensignal erzeugen und die Leseantenne damit beaufschlagen, so dass ein entsprechendes Lesefeld durch die Leseantenne abgestrahlt wird.

Die Lesesteuerung kann eingerichtet sein zum Detektieren eines zweiten Betriebszustands, wie dem Verriegelungszustand der Gefäßanordnung, basierend vorzugsweise auf einem lesbaren bzw. auslesbaren Transponder (bzw. abhängig davon, ob ein Transponder auslesbar ist (oder nicht)). Die Lesesteuerung kann vorzugsweise ein RFID-Leser bzw. -Reader sein.

Die oberen Topfkontakte, die insbesondere, in einer vertikalen Richtung des Speiseaufnahmeelements gesehen, oberhalb der unteren Topfkontakte angeordnet sein können, dienen einer elektrischen Kopplung mit dem ersten Deckelkontakt und dem zweiten Deckelkontakt.

Anmeldungsgemäß sind die oberen Topfkontakte derart an dem Speiseaufnahmeelement angeordnet und der erste Deckelkontakt und der zweite Deckelkontakt derart an dem Deckel angeordnet, dass eine elektrische Verbindung zwischen den jeweiligen Kontakten nur dann hergestellt wird, wenn sich der Deckel in der zweiten Betriebsposition befindet. Wenn der Deckel nicht (ordnungsgemäß) an dem Speiseaufnahmeelement positioniert ist, ist zumindest eine elektrische Verbindung zwischen den genannten Kontakten nicht hergestellt. Eine Beaufschlagung der Leseantenne mit einem Antennensignal ist nicht möglich, so dass insbesondere ein Auslesen des Transponders nicht möglich ist.

Dies ermöglicht es, dass die Lesesteuerung insbesondere anhand einer Auslesung oder Nicht-Auslesung eines Transponders (unmittelbar) feststellen kann, ob sich der Deckel in der zweiten Betriebsposition, insbesondere der Verriegelungsposition, befindet (also ordnungsgemäß verriegelt ist) oder nicht. So verbindet die in dem Deckel angeordnete elektrische Kontaktbrücke, enthaltend die Leseantenne, nur dann den ersten unteren Topfkontakt mit dem zweiten unteren Topfkontakt, wenn sich der Deckel in der zweiten Betriebsposition befindet. Anders ausgedrückt, ist die Anordnung der Kontakte an Deckel und Speiseaufnahmeelement so gewählt, dass der Stromkreis nur dann geschlossen ist, wenn der Deckel die (definierte) zweite Betriebsposition an bzw. auf dem Speiseaufnahmeelement einnimmt.

Vorzugsweise kann abhängig von einem detektierten bzw. festgestellten zweiten Betriebszustand (z.B. Verriegelungszustand oder (ordnungsgemäßer) Positionszustand) eines Deckels eine bestimmte Gerätefunktion des Küchengeräts für einen Nutzer freigegeben werden. Dies meint insbesondere, dass die Gerätefunktion nur bei einem Feststellen des zweiten Betriebszustands, wie dem Verriegelungszustand, des Deckels freigebbar ist. Bei Detektion eines anderen (z.B. ersten) Betriebszustands, wie einen Nicht-Verriegelungszustand oder einen Nicht-Positionszustand, kann die Gerätefunktion (vorzugsweise sämtliche Gerätefunktionen) gesperrt werden bzw. bleiben. Die Sicherheit beim Betrieb des Küchengeräts kann verbessert werden.

Gemäß einer Ausführungsform der anmeldungsgemäßen Gefäßanordnung kann die Leseantenne eine erste Antennenspule sein. Insbesondere kann die Antennenspule eine RFID-basierte Antennenspule sein. Die Antennenspule kann aus Kupfer gebildet sein. Es versteht sich, dass auch andere elektrisch leitfähige Materialien, insbesondere Metalle, verwendet werden können, beispielsweise Aluminium oder dergleichen. Die Anzahl an Windungen der Antennenspule kann vorzugweise zwischen 1 und 10 sein, besonders bevorzugt zwischen 1 und 5, ganz besonders bevorzugt 3 oder 4.

Besonders bevorzugt kann die mindestens eine Windung entlang des Deckelrands verlaufen und/oder entsprechend gebogen sein. Die mindestens eine Windung kann beispielsweise in dem Deckel bei der Fertigung in einen Deckel-Grundkörper eingelegt und anschließend mit einer Abdeckung (vorzugsweise gebildet aus Kunststoff) versehen werden. Die Abdeckung kann z.B. per Ultraschallschweißen an dem Deckel-Grundkörper befestigt werden. In einfacher Weise kann eine Leseantenne bereitgestellt werden.

Alternativ oder zusätzlich kann der Transponder ein passiver Transponder mit einer zweiten (zu der ersten Antennenspule korrespondierende) Antennenspule sein. Passiv meint insbesondere, dass der Transponder nicht aktiv ein Sendefeld aussenden kann, sondern insbesondere nur ein empfangenes Lesefeld (abhängig von der zu übertragenden Information) manipulieren kann. Passiv meint (ferner) insbesondere, dass der Transponder über keine eigene Energiequelle (z.B. Batterie) verfügt, sondern durch das Lesefeld bzw. Sendefeld der Leseantenne mit Energie versorgt wird. Bei Varianten der Anmeldung kann auch ein aktiver Transponder implementiert sein. Ein aktiver Transponder kann insbesondere über eine eigene Energiequelle verfügen, wie eine Batterie. Bei dieser Variante ist dann der Transponder in der Lage, aktiv ein Sendefeld auszusenden oder auf ein empfangenes Lesefeld oder empfangenes Signal zu reagieren.

Wie beschrieben wurde, kann der Transponder vorzugsweise eine Spule als Empfangsantenne aufweisen. Durch Induktion, ähnlich wie in einem Transformator, kann ein Kondensator des Transponders aufgeladen werden. Diese Energie kann durch den Transponder insbesondere zum Antworten auf eine in dem Lesefeld enthaltene Anfrage verwendet werden. Hierdurch kann ein einfacher und zuverlässig arbeitender Transponder bereitgestellt werden.

Darüber hinaus kann der Transponder innerhalb der mindestens einen Windung angeordnet sein. Anders ausgedrückt, die mindestens eine Windung kann entlang des Deckelrands verlaufen und der Transponder (im Vergleich zu der Windung) näher zum Deckelmittelpunkt angeordnet sein.

Der Transponder kann beispielsweise stoffschlüssig an dem Deckel angeordnet sein. Vorzugsweise können der Transponder und insbesondere die zweite Antennenspule des Transponders durch eine Abdeckung (insbesondere aus Kunststoff) abgedeckt sein.

Gemäß einer weiteren Ausführungsform der anmeldungsgemäßen Gefäßanordnung kann/können die elektrische Verbindung zwischen dem ersten Deckelkontakt und dem ersten oberen Topfkontakt und/oder die elektrische Verbindung zwischen dem zweiten Deckelkontakt und dem zweiten oberen Topfkontakt eine kontaktbehaftete (bzw. drahtgebundene) elektrische Verbindung sein. Vorzugsweise können die beiden elektrischen Verbindungen gleich ausgebildet sein. Insbesondere können die jeweiligen Kontakte als Schleifkontakte oder Federkontakte ausgebildet sein.

Um insbesondere den Herstellungsaufwand noch weiter zu reduzieren und eine leichte Reinigung bei einer aufgetretenen Verschmutzung zu ermöglichen, können, gemäß einer weiteren Ausführungsform der anmeldungsgemäßen Gefäßanordnung, der erste Deckelkontakt und der zweite Deckelkontakt freiliegende elektrische Kontakte sein. Vorzugsweise können ferner zumindest der erste obere Topfkontakt und der zweite obere Topfkontakt freiliegende elektrische Kontakte sein. Insbesondere können die oberen Kontaktelemente in Form von gebogenen Federdrahtelementen gebildet sein. Die Deckelkontakte können insbesondere in Form von gebogenen Federdrahtelementen gebildet sein. Bei anderen Varianten der Anmeldung kann ein Kontakt auch durch ein (gebogenes) (Feder-)Blech oder dergleichen gebildet sein.

Die Deckelkontakte und die oberen Topfkontakte können insbesondere aus dem gleichen elektrisch leitfähigen Material gebildet sein, vorzugsweise Kupfer oder Aluminium.

Besonders bevorzugt kann der erste Deckelkontakt und der zweite Deckelkontakt derart zu dem ersten oberen Topfkontakt und dem zweiten oberen Topfkontakt angeordnet sein, dass bei einer Bewegung des Deckels von der ersten Betriebsposition in die zweite Betriebsposition der Deckel derart geführt ist, dass der erste Deckelkontakt an dem ersten oberen Topfkontakt und der zweite Deckelkontakt an dem zweiten oberen Topfkontakt kontaktbehaftet für eine bestimmte Strecke (z.B. 1 mm bis 10mm) aneinander reiben.

Vorzugsweise kann ein erster Deckelkontakt eine erste Längserstreckung in eine erste Richtung aufweisen und der (zugehörige) erste obere Topfkontakt eine zweite Längserstreckung in eine zweite Richtung aufweisen, wobei zwischen der ersten und der zweiten Richtung (die sich insbesondere in der gleichen Ebene befinden) ein Winkel zwischen 10° und 90° vorhanden sein kann, vorzugsweise von ca. 90°.

Insbesondere kann der Deckel durch eine Topfführung derart bei der Schließbewegung, also insbesondere beim Bewegen von einer unverriegelten Position in die verriegelte Position des Deckels (was z.B. in Form einer Drehbewegung erfolgen kann), geführt, dass die genannten Kontakte aneinander gleiten. So ist erkannt worden, dass sich an einem Kontakt Schmutz ablagern kann. Dieser Schmutz kann den Übergangswiderstand zwischen zwei Kontakten (erheblich) beeinträchtigen. Durch die bevorzugte Positionierung, Ausbildung und/oder Ausrichtung der genannten Kontakte können evtl. vorhandene Verunreinigungen abgeschabt werden. Die Beeinträchtigung des Übergangswiderstands kann zumindest reduziert werden.

Darüber hinaus kann vorzugsweise ein (erster oder zweiter) Deckelkontakt und/oder ein (erster oder zweiter) oberer Topfkontakt und/oder ein (erster oder zweiter) unterer Topfkontakt mit einem Füllmaterial hinterfüttert sein. Insbesondere kann eine Hinterfütterung der Durchtrittstellen der genannten Kontakte mit einem elastischen Material (z.B. Silikon) vorgesehen sein. Dies hat insbesondere den Vorteil, dass ein Eindringen und/oder Ansammeln von Schmutz an den Kontakten zumindest reduziert wird. Eine Reinigung wird noch weiter erleichtert.

Gemäß einer weiteren bevorzugten Ausführungsform der Gefäßanordnung kann/können die elektrische Verbindung zwischen dem ersten Deckelkontakt und dem ersten oberen Topfkontakt und/oder die elektrische Verbindung zwischen dem zweiten Deckelkontakt und dem zweiten oberen Topfkontakt eine kontaktlose (bzw. drahtlose) elektrische Verbindung sein. Vorzugsweise können die beiden elektrischen Verbindungen gleich ausgebildet sein. Die kontaktlose elektrische Verbindung ist vorzugsweise eine kapazitive Verbindung. Alternativ ist auch eine induktive Verbindung möglich.

Besonders bevorzugt kann der erste Deckelkontakt als ein erstes Deckelflächenelement und der zweite Deckelkontakt kann als ein zweites Deckelflächenelement gebildet sein. Der erste obere Topfkontakt kann als ein erstes Topfflächenelement und der zweite obere Topfkontakt kann als ein zweites Topfflächenelement gebildet sein. In der zweiten Betriebsposition des Deckels können das erste Deckelflächenelement und das erste Topfflächenelement einen ersten Koppelkondensator und das zweite Deckelflächenelement und das zweite Topfflächenelement einen zweiten Koppelkondensator bilden. Insbesondere bilden die genannten Flächenelemente nur in der zweiten Betriebsposition des Deckels einen jeweiligen Koppelkondensator. Mit anderen Worten kann nur in der zweiten Betriebsposition das durch die Lesesteuerung bereitgestellte Antennensignal an die Leseantenne über die genannten Koppelkondensatoren übertragen werden.

Wie beschrieben wurde, sind die genannten jeweiligen Kontakte vorzugsweise als Flächenelemente ausgebildet, beispielsweise als elektrisch leitfähige Folien. Die Flächenelemente dienen als Elektroden eines Kondensators bzw. Kondensatorelektroden. Insbesondere bilden die genannten Flächenelemente nur in dem verriegelten Zustand der Gefäßanordnung einen Kondensator, liegen sich also räumlich übereinander bzw. nebeneinander.

Das Dielektrikum eines Koppelkondensators wird insbesondere durch Luft und den als Abdeckung am Speiseaufnahmeelement und/oder Deckel verwendeten Kunststoff bestimmt. Flüssigkeiten und/oder Lebensmittel, die sich am Deckel und/oder am Speiseaufnahmeelement zwischen den Kondensatorelektroden befinden können, haben ebenfalls einen Einfluss auf die Kapazität. Dieser Einfluss kann insbesondere bei einer Toleranzanalyse berücksichtigt werden.

Vorzugsweise kann die Gefäßanordnung eine Mehrzahl von (unterschiedlichen) Deckeln umfassen. Unterschiedliche Deckel meint vorliegend insbesondere unterschiedliche Deckeltypen. Bei einer Ausführungsform kann die Gefäßanordnung einen ersten Deckel bzw. Deckeltyp mit einer ersten Gerätefunktion und mindestens einen weiteren Deckel bzw. Deckeltyp mit einer weiteren sich von der ersten Gerätefunktion unterscheidenden Gerätefunktion umfassen. Beispielhafte und nicht abschließende Küchengerätefunktionen bzw. Gerätefunktion sind eine erste Schneidfunktion mit einer ersten maximal zulässigen Solldrehzahl und/oder Solldrehmoment, eine weitere Schneidfunktion mit einer zweiten (sich von der ersten maximal zulässigen Solldrehzahl und/oder Solldrehmoment unterscheidenden) maximal zulässigen Solldrehzahl und/oder Solldrehmoment, eine erste Rührfunkton mit einer ersten maximal zulässigen Solldrehzahl und/oder Solldrehmoment, eine weitere Rührfunkton mit einer zweiten (sich von der ersten maximal zulässigen Solldrehzahl und/oder Solldrehmoment unterscheidenden) maximal zulässigen Solldrehzahl und/oder Solldrehmoment, eine erste Motordrehrichtung, eine zweite entgegengesetzte Motordrehrichtung, eine erste Solltemperatur und/oder ein erster Solltemperaturbereich einer in dem Speiseaufnahmeelement integrierten Heizung, eine zweite (sich von der ersten Solltemperatur unterscheidenden) Solltemperatur und/oder ein zweiter (sich von dem ersten Solltemperaturbereich unterscheidenden) Solltemperaturbereich einer in dem Speiseaufnahmeelement integrierten Heizung, Steuerprogramme und/oder Steuerprogrammsollparameter für bestimmte Operationen etc.

Gemäß einer weiteren Ausführungsform der anmeldungsgemäßen Gefäßanordnung kann der Transponder mindestens einen auslesbaren Speicher umfassen. In dem (Daten-)Speicher kann/können zumindest eine Deckelkennung und/oder eine Deckeltypkennung gespeichert sein. Eine Deckelkennung kann systemweit eineindeutig einen Deckel identifizieren. Eine Deckeltypkennung kann systemweit eindeutig einen bestimmten Deckeltyp aus einer Mehrzahl von Deckeltypen identifizieren. Bei einer Variante kann die Deckeltypkennung in der Deckelkennung enthalten sein

Die Deckelkennung und/oder die Deckeltypkennung sind insbesondere über die Leseantenne durch die Lesesteuerung auslesbar. Insbesondere kann der Transponder eingerichtet sein zum Antworten auf den Erhalt eines Lesefelds mit der Deckelkennung und/oder Deckeltypkennung.

Es versteht sich, dass bei Varianten der Anmeldung mindestens ein weiteres Datum in dem Speicher gespeichert und insbesondere auslesbar sein kann (z.B. mindestens ein zulässiges und/oder nicht zulässiges Zubehörteil des Deckels, mindestens eine zulässige und/oder nicht zulässige Gerätefunktion des Deckels etc.).

Gemäß einer weiteren Ausführungsform der anmeldungsgemäßen Gefäßanordnung kann die Gefäßanordnung mindestens ein mit der Gefäßanordnung koppelbares Zubehörteil (z.B. Varoma, Rühraufsatz, Messerabdeckung, Messbecher, Garkörbchen und dergleichen) umfassen. Das mindestens eine Zubehörteil kann insbesondere eine zusätzliche Gerätefunktion bereitstellen. Vorzugsweise kann die Gefäßanordnung eine Mehrzahl von unterschiedlichen Zubehörteilen bzw. unterschiedlichen Zubehörteiltypen umfassen.

Bei einer Ausführungsform kann die Gefäßanordnung ein erstes Zubehörteil bzw. ein erster Zubehörteiltyp mit einer ersten zusätzlichen Gerätefunktion und mindestens ein weiteres Zubehörteil bzw. weiteren Zubehörteiltyp mit einer weiteren zusätzlichen sich von der ersten zusätzlichen Gerätefunktion unterscheidenden Gerätefunktion umfassen. Hierbei ist ein Vorteil, dass ein Zubehörteil erst dann detektiert werden kann, wenn sich der Deckel in der zweiten Betriebsposition befindet, insbesondere in der verriegelten Position.

Das Zubehörteil kann mindestens einen Zubehörtransponder umfassen. Der Zubehörtransponder kann entsprechend dem zuvor beschriebenen (Deckel-) Transponder gebildet sein.

Darüber hinaus kann, gemäß einer weiteren Ausführungsform der anmeldungsgemäßen Gefäßanordnung, der Zubehörtransponder an dem Zubehörteil angeordnet sein, derart, dass der Zubehörtransponder in einem Kopplungszustand des Zubehörteils mit dem Deckel oder dem Speiseaufnahmeelement in Reichweite der Leseantenne ist. Mit anderen Worten, der Zubehörtransponder ist zumindest dann auslesbar durch die Leseantenne des Deckels, wenn das Zubehörteil (ordnungsgemäß) an dem Deckel oder dem Speiseaufnahmeelement positioniert ist (insbesondere gekoppelt ist).

Darüber hinaus kann der Zubehörtransponder mindestens einen auslesbaren Speicher umfassen. In dem (Daten-)Speicher kann/können zumindest eine Zubehörkennung (wie eine Seriennummer oder eine Universally Unique Identifier (UUID)) und/oder eine Zubehörtypkennung gespeichert sein. Eine Zubehörkennung kann systemweit eineindeutig ein Zubehörteil identifizieren. Eine Zubehörtypkennung kann systemweit eindeutig einen bestimmten Zubehörteiltyp aus einer Mehrzahl von Zubehörteiltypen identifizieren. Bei einer Variante kann die Zubehörtypkennung in der Zubehörkennung enthalten sein. Diese können vor dem Vertrieb (während oder am Ende der Fertigung) hinterlegt werden. Die Zubehörkennung und/oder Zubehörtypkennung sind insbesondere über die Leseantenne durch die Lesesteuerung auslesbar. Insbesondere kann der Zubehörtransponder eingerichtet sein zum Antworten auf den Erhalt eines Lesefelds mit der Zubehörkennung und/oder Zubehörtypkennung.

Es versteht sich, dass bei Varianten der Anmeldung mindestens ein weiteres Datum in dem Speicher gespeichert und insbesondere auslesbar sein kann (z.B. mindestens eine zulässige und/oder nicht zulässige zusätzliche Gerätefunktion des Zubehörteils etc. und/oder Herkunftsinformation(en) (wie Herstelleridentität, Herstellungszeitpunkt, Herstellungsort und/oder Authentifizierungsinformation)).

Gemäß einer weiteren Ausführungsform der anmeldungsgemäßen Gefäßanordnung können der erste Deckelkontakt und der zweite Deckelkontakt an im Wesentlichen gegenüberliegenden Seiten des Deckelrands angeordnet sein. Ferner können der erste obere Topfkontakt und der zweite obere Topfkontakt an im Wesentlichen gegenüberliegenden Seiten des Topfrands angeordnet sein.

Ein weiterer Aspekt der Anmeldung ist ein Küchengerät. Das Küchengerät umfasst eine zuvor beschriebene Gefäßanordnung. Das Küchengerät umfasst eine Gerätebasis. Die Gerätebasis umfasst eine mit einem ersten Basiskontakt und einem zweiten Basiskontakt elektrisch gekoppelte (zuvor beschriebene) Lesesteuerung. Der erste Basiskontakt ist mit dem ersten unteren Topfkontakt und der zweite Basiskontakt ist mit dem zweiten unteren Topfkontakt elektrisch verbunden.

Die Gerätebasis kann vorzugsweise eine zu dem Speiseaufnahmeelement der Gefäßanordnung derart korrespondierende Topfaufnahme aufweisen, dass eine elektrische Verbindung zwischen dem ersten unteren Topfkontakt und dem ersten Basiskontakt und eine elektrische Verbindung zwischen dem zweiten unteren Topfkontakt und dem zweiten Basiskontakt hergestellt werden, wenn das Speiseaufnahmeelement in der Topfaufnahme angeordnet ist.

Die Topfaufnahme ist eingerichtet zum Aufnehmen des Speiseaufnahmeelements, insbesondere zumindest des Bodens des Speiseaufnahmeelements. Die Topfaufnahme kann derart zu dem Speiseaufnahmeelement der Gefäßanordnung (strukturell) korrespondieren, dass eine elektrische Verbindung zwischen dem ersten unteren Topfkontakt und einem ersten elektrischen Basiskontakt der Gerätebasis und eine elektrische Verbindung zwischen dem zweiten unteren Topfkontakt und einem zweiten elektrischen der Gerätebasis (nur dann) hergestellt werden, wenn das Speiseaufnahmeelement in der Topfaufnahme (korrekt) angeordnet ist.

Wie bereits beschrieben wurde, kann die Lesesteuerung insbesondere eingerichtet sein zum Bereitstellen eines Antennensignals für die Leseantenne. Insbesondere kann die Lesesteuerung ein RFID-Leser (z.B. gebildet durch einen Mikrocontroller) sein.

Die Lesesteuerung kann in der Gerätesteuerung integriert sein oder mit der Gerätesteuerung kommunikativ verbunden sein.

Gemäß einer Ausführungsform des anmeldungsgemäßen Küchengeräts kann die Lesesteuerung ein Auswertemodul umfassen, eingerichtet zum Detektieren eines zweiten Betriebszustands, insbesondere des Verriegelungszustands, des Deckels, basierend auf einem lesbaren Transponder. Anders ausgedrückt, ein zweiter Betriebszustand, bei dem der Deckel betriebsbereit an dem Speiseaufnahmeelement positioniert ist, wie beispielsweise der Verriegelungszustand, kann durch das Auswertemodul dann festgestellt werden, wenn ein Transponder auslesbar ist. Wenn ein Transponder nicht auslesbar ist, kann durch das Auswertemodul festgestellt werden, dass ein erster Betriebszustand vorliegt, bei dem der Deckel nicht betriebsbereit an dem Speiseaufnahmeelement positioniert ist, wie beispielsweise ein Nicht-Verriegelungszustand. Insbesondere ist in diesem Fall der Stromkreis mit der Leseantenne nicht geschlossen, da der Deckel nicht in der zweiten Betriebsposition ist.

Darüber hinaus kann, gemäß einer weiteren Ausführungsform des anmeldungsgemäßen Küchengeräts, das Auswertemodul eingerichtet sein zum Bestimmen des Deckeltyps (des in der zweiten Betriebsposition befindlichen Deckels), basierend auf einer erhaltenen bzw. ausgelesenen Deckelkennung und/oder Deckeltypkennung und insbesondere einem (vordefinierten) Deckeltypkriterium. Das Deckeltypkriterium kann in einem durch die Lesesteuerung zugreifbaren Datenspeicher der Gerätebasis gespeichert sein. Beispielsweise kann als Deckeltypkriterium eine Zuordnungstabelle oder dergleichen vorgesehen sein. In der Zuordnungstabelle kann jedem (möglichen) Deckeltyp der Gefäßanordnung beispielswiese eine Deckeltypkennung zugeordnet sein. Bei Erhalt einer ausgelesenen Deckeltypkennung kann dann der Deckeltyp des in der zweiten Betriebsposition positionierten Deckels bestimmt werden. Insbesondere wird die erhaltene Deckeltypkennung mit den gespeicherten Deckeltypkennungen der Zuordnungstabelle verglichen. Wird eine Übereinstimmung festgestellt, kann der zugeordnete Deckeltyp bestimmt werden und beispielsweise durch eine Nutzerschnittstelle ausgegeben und/oder einem Freigabemodul bereitgestellt werden. Wird keine Übereinstimmung festgestellt, kann diese Information beispielsweise durch eine Nutzerschnittstelle ausgegeben und/oder einem Freigabemodul bereitgestellt werden. In einfacher und zuverlässiger Weise kann der Deckeltyp bestimmt werden.

Gemäß einer weiteren Ausführungsform des anmeldungsgemäßen Küchengeräts kann die Gerätebasis ein zwischen der Lesesteuerung und dem ersten Basiskontakt und dem zweiten Basiskontakt angeordnetes Filter- und Anpassungsnetzwerk umfassen. Insbesondere kann das Filter- und Anpassungsnetzwerk (z.B. gebildet durch Kondensatoren, Spulen und/oder Widerstände) derart konfiguriert sein, dass für die Lesesteuerung (vorzugsweise ein RFID-Leser bzw. -Reader) eine (geeignete) Gesamtimpedanz gebildet wird, so dass insbesondere die Antennenspule als RFID-Antenne genutzt werden kann. Bei Varianten der Anmeldung kann das Filter- und Anpassungsnetzwerk auch teilweise in bzw. an dem Speiseaufnahmeelement und/oder dem Deckel angeordnet sein.

Gemäß einer weiteren Ausführungsform des anmeldungsgemäßen Küchengeräts kann die Gerätebasis ein Freigabemodul umfassen. Das Freigabemodul kann eingerichtet sein zum Freigeben einer Gerätefunktion des Küchengeräts nur bei Detektion des zweiten Betriebszustands (z.B. Verriegelungszustand) des Deckels bzw. der Gefäßanordnung. Das Freigabemodul kann insbesondere mit dem Auswertemodul kommunikativ verbunden sein. Beispielsweise kann das Freigabemodul in der Lesesteuerung integriert sein. Wenn kein entsprechender Betriebszustand detektiert wird, bleibt die mindestens eine Gerätefunktion gesperrt. Indem eine Gerätefunktion des Küchengeräts beispielsweise nur bei Detektion des Verriegelungszustands des Deckels freigegeben und damit ausgeführt werden kann, kann die Sicherheit beim Betrieb des Küchengeräts noch weiter verbessert werden.

Vorzugsweise kann das Freigabemodul eingerichtet sein zum Freigeben mindestens einer Gerätefunktion, basierend auf dem bestimmten Deckeltyp und dem Deckeltypkriterium. Insbesondere kann das Deckeltypkriterium definieren, für welche mindestens eine Gerätefunktion ein Deckeltyp zugelassen ist. Abhängig von dem ausgelesenen Deckeltyp und dem (vordefinierten) Deckeltypkriterium kann nur die mindestens eine Gerätefunktion freigegeben werden, die für diesen Deckeltyp zulässig ist. Wenn ein Deckeltyp nicht festgestellt werden kann, kann die mindestens eine Gerätefunktion des Küchengeräts gesperrt bleiben. Die Sicherheit kann noch weiter verbessert werden.

Wenn in dem Speicher des Transponders des Deckels gespeichert ist, für welche mindestens eine Gerätefunktion der Deckel zugelassen ist, kann das Freigeben der mindestens einen Gerätefunktion auch auf einem entsprechenden, ausgelesenen Datum basieren.

Für den Fall, dass ein Zubehörteil mit dem in der zweiten Betriebsposition befindlichen Deckel gekoppelt ist (also insbesondere ordnungsgemäß an dem Deckel angeordnet ist), kann das Freigabemodul ferner eingerichtet sein zum Freigeben der Gerätefunktion, (zusätzlich) basierend auf dem bestimmten Zubehörtyp und einem Zubehörtypkriterium. Das Zubehörtypkriterium kann in einem durch das Freigabemodul zugreifbaren Datenspeicher der Gerätebasis gespeichert sein. Insbesondere kann das Zubehörtypkriterium definieren, für welche mindestens eine Gerätefunktion ein Zubehörteiltyp zugelassen ist. Abhängig von dem ausgelesenen Zubehörteiltyp und dem (vordefinierten) Zubehörtypkriterium kann nur die mindestens eine Gerätefunktion freigegeben werden, die für diesen Zubehörteiltyp zulässig ist. Die Sicherheit kann noch weiter verbessert werden.

Wenn in dem Speicher des Zubehörtransponders gespeichert ist, für welche mindestens eine Gerätefunktion das Zubehörteil zugelassen ist, kann das Freigeben der mindestens einen Gerätefunktion auch auf einem entsprechenden, ausgelesenen Datum basieren.

Ein weiterer Aspekt der Anmeldung ist ein Verfahren zum Bestimmen bzw. Detektieren einer zweiten Betriebsposition des Deckels bzw. eines zweiten Betriebszustands bei einer zuvor beschriebenen Gefäßanordnung. Das Verfahren umfasst:
- Detektieren, durch eine Lesesteuerung, der zweiten Betriebsposition des Deckels der Gefäßanordnung, basierend auf einem lesbaren Transponder (bzw. abhängig davon, ob ein Transponder (überhaupt) auslesbar ist (oder nicht)).

Die Lesesteuerung kann insbesondere eine zuvor beschriebene Lesesteuerung sein. Vorzugsweise kann eine Gerätebasis eines zuvor beschriebenen Küchengeräts die Lesesteuerung umfassen. Bei Varianten der Anmeldung kann auch die Gefäßanordnung die Lesesteuerung zumindest teilweise umfassen.

Das Verfahren kann vorzugsweise zum Bestimmen eines Verriegelungszustands bei einer zuvor beschriebenen Gefäßanordnung eines zuvor beschriebenen Küchengeräts verwendet werden. Vorzugweise kann das Verfahren ferner zum Identifizieren des Deckeltyps und/oder Zubehörteiltyps verwendet werden, wie zuvor beschrieben wurde.

Ein Modul, eine Einrichtung oder dergleichen kann zumindest teilweise durch Hardwareelemente und/oder Softwareelemente realisiert sein. Grundsätzlich können Daten unmittelbar übertragen oder zunächst gesammelt und zwischengespeichert werden, um sie dann z.B. zu bestimmten Zeitpunkten zusammen zu übertragen. Ferner beziehen sich die Begriffe, wie "oben", "ober", "unten", "unter" etc., auf die vertikal zu einer horizontalen Ebene verlaufende Richtung und auf eine auf einer horizontalen Fläche aufgestellte/s Gefäßanordnung und/oder Küchengerät. Sofern nichts anderes angegeben ist, dienen Ausdrücke, wie "erstens", "zweitens" etc., lediglich der Unterscheidung zweier Elemente und geben keine Reihenfolge an.

Es gibt nun eine Vielzahl von Möglichkeiten, die anmeldungsgemäße Gefäßanordnung, das anmeldungsgemäße Küchengerät und das anmeldungsgemäße Verfahren auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer Gefäßanordnung gemäß der vorliegenden Anmeldung,
- Fig. 2: eine schematische Ansicht eines Ausführungsbeispiels eines Küchengeräts gemäß der vorliegenden Anmeldung,
- Fig. 3a: eine schematische Ansicht eines Ausführungsbeispiels eines Topfs einer Gefäßanordnung gemäß der vorliegenden Anmeldung,
- Fig. 3b: eine vergrößerte Ansicht eines oberen Topfkontakts des Topfs gemäß Figur 3a,
- Fig. 3c: eine schematische Ansicht eines Ausführungsbeispiels eines Deckels einer Gefäßanordnung gemäß der vorliegenden Anmeldung,
- Fig. 4: eine schematische Draufsicht eines Ausführungsbeispiels gemäß der vorliegenden Anmeldung,
- Fig. 5: ein Beispiel eines Ersatzschaltbilds eines Gesamtnetzwerks einer Gefäßanordnung gemäß der vorliegenden Anmeldung,
- Fig. 6: eine schematische Ansicht eines weiteren Ausführungsbeispiel eines Küchengeräts gemäß der vorliegenden Anmeldung, und
- Fig. 7: ein Diagramm eines Ausführungsbeispiels eines Verfahrens gemäß der vorliegenden Anmeldung.

Nachfolgend werden für ähnliche Elemente ähnliche Bezugszeichen verwendet.

Insbesondere wird in den nachfolgenden Ausführungsbeispielen beispielhaft von einem Topf als Speisenaufnahmeelement ausgegangen. Es versteht sich, dass die Ausführungen auf andere Speisenaufnahmeelemente übertragen werden können. Ferner wird in den nachfolgenden Ausführungsbeispielen beispielhaft von einer unverriegelten Position als erste Betriebsposition, einer verriegelten Position als zweite Betriebsposition und einem Verriegelungszustand als einen zweiten Betriebszustand ausgegangen. Auch hier können die Beispiele in einfacher Weise auf andere Betriebspositionen und/oder Betriebszustände übertragen werden.

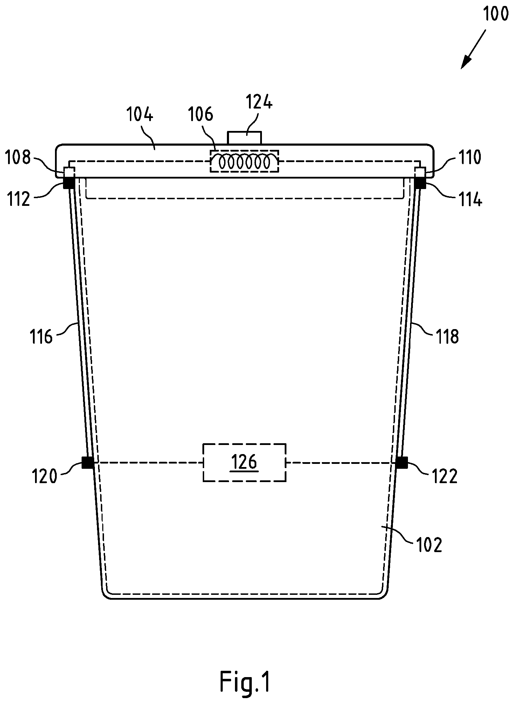

Die Figur 1 zeigt eine schematische Ansicht eines Ausführungsbeispiels einer Gefäßanordnung 100 gemäß der vorliegenden Anmeldung für ein Küchengerät, insbesondere eine Küchenmaschine, eingerichtet zum zumindest teilweise automatisierten Zubereiten von Speisen. Die dargestellte Gefäßanordnung 100 umfasst einen Topf 102 und mindestens einen Deckel 104. Der Topf 102 weist eine umlaufende Topfwandung und einen Topfboden auf.

Der Deckel 104 ist eingerichtet zum Verschließen einer Öffnung des Topfs 102. Dieser verschlossene Zustand der Gefäßanordnung 100 ist in der Figur 1 dargestellt. Insbesondere befindet sich der Deckel 104 in der Figur 1 in der verriegelten Position. Dies meint insbesondere, dass der Deckel 104 mit dem Topf 102 (korrekt) mechanisch verriegelt ist, die Gefäßanordnung 100 also in dem Verriegelungszustand ist.

Der Deckel 104 ist relativ bewegbar zu dem Topf 102, insbesondere zwischen einer unverriegelten Position und der (definierten) verriegelten Position. Der Verriegelungsmechanismus kann beispielsweise eine Bajonett-Verriegelung oder eine ähnliche mechanische Verriegelung sein.

Wie ferner zu erkennen ist, weist der Deckel 104 eine zwischen einem ersten elektrischen Deckelkontakt 108 und einem zweiten elektrischen Deckelkontakt 110 angeordnete Leseantenne 106 auf, beispielsweise eine Antennenspule 106. Mit anderen Worten, die Leseantenne 106 ist elektrisch mit dem ersten elektrischen Deckelkontakt 108 und dem zweiten elektrischen Deckelkontakt 110 verbunden. Die Leseantenne 106 verbindet demnach insbesondere die Deckelkontakte 108, 110 elektrisch miteinander.

Darüber hinaus weist der Deckel 104 einen Transponder 124 bzw. Tag 124 auf. Der drahtlos auslesbare Transponder 124 (auch Deckeltransponder 124 genannt) ist derart an bzw. in dem Deckel 104 angeordnet, dass sich der Transponder 124 in Reichweite der Leseantenne 106 befindet. Mit anderen Worten, ein durch die Leseantenne 106 ausgesendetes Lesefeld deckt stets den Transponder 124 ab. Der Transponder 124 und die Leseantenne 106 sind fest bzw. unveränderlich an oder in dem Deckel 104 befestigt.

Der Topf 102 weist zumindest eine erste zwischen einem ersten oberen elektrischen Topfkontakt 112 und einem ersten unteren elektrischen Topfkontakt 120 verlaufende elektrische Topfverbindung 116 und eine zweite zwischen einem zweiten oberen elektrischen Topfkontakt 114 und einem zweiten unteren elektrischen Topfkontakt 122 verlaufende elektrische Topfverbindung 118 auf. Der erste untere Topfkontakt 120 und der zweite untere Topfkontakt 122 sind eingerichtet zum elektrischen Verbinden mit einer Lesesteuerung 126.

Beispielsweise kann der Topf 102 die Lesesteuerung 126 umfassen, wie durch die gestrichelten Linien in der Figur 1 angedeutet ist. Wie bereits beschrieben wurde, kann die Lesesteuerung 126 insbesondere eingerichtet sein zum Bereitstellen eines Antennensignals. Das Antennensignal kann insbesondere durch die Lesesteuerung 126 bei einem geschlossenen Stromkreis an die Leseantenne 106 angelegt werden. Insbesondere kann die Lesesteuerung 126 ein RFID-Leser 126 (z.B. gebildet durch einen Mikrocontroller) sein.

Anmeldungsgemäß sind, wie in der Figur 1 dargestellt, der erste Deckelkontakt 108 und der zweite Deckelkontakt 110 an dem Deckel 104 und relativ zu den oberen Topfkontakten 112, 114 angeordnet, derart, dass eine elektrische Verbindung zwischen dem ersten Deckelkontakt 108 und dem ersten oberen Topfkontakt 112 und eine elektrische Verbindung zwischen dem zweiten Deckelkontakt 110 und dem zweiten oberen Topfkontakt 114 nur in der verriegelten Position hergestellt werden. Anders ausgedrückt, ein Antennensignal kann nur dann durch die Lesesteuerung 126 an die Leseantenne 106 angelegt werden, wenn sich der Deckel 104 in der verriegelten Position befindet. Nur in der verriegelten Position ist der Stromkreis, wie dargestellt, geschlossen.

Eine elektrische Verbindung zwischen einem Deckelkontakt und einem Topfkontakt kann kontaktlos oder kontaktbehaftet sein.

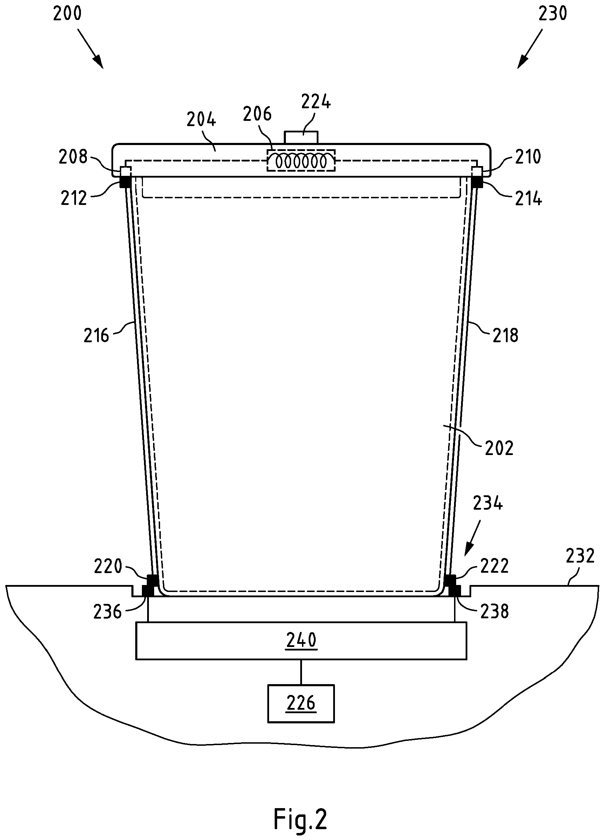

Die Figur 2 zeigt eine schematische Ansicht eines Ausführungsbeispiels eines Küchengeräts 230 gemäß der vorliegenden Anmeldung, insbesondere mit einer Gefäßanordnung 200. Die Gefäßanordnung 200 kann beispielsweise im Wesentlichen entsprechend der Gefäßanordnung 100 nach Figur 1 gebildet sein. Das Küchengerät 230 ist insbesondere eingerichtet zum zumindest teilweise automatisierten Zubereiten von Warmspeisen.

Das dargestellte Küchengerät 230 umfasst eine Gerätebasis 232 mit einer Topfaufnahme 234. Die Aufnahme 234 ist eingerichtet zum Aufnehmen des Topfs 202, insbesondere zumindest des Topfbodens. Wie zu erkennen ist, korrespondiert die Topfaufnahme 234 derart zu dem Topf 202 der Gefäßanordnung 200, dass eine elektrische Verbindung zwischen dem ersten unteren Topfkontakt 220 und einem ersten elektrischen Basiskontakt 236 der Gerätebasis 232 und eine elektrische Verbindung zwischen dem zweiten unteren Topfkontakt 222 und einem zweiten elektrischen Basiskontakt 238 der Gerätebasis 232 hergestellt werden, wenn der Topf 202 in der Topfaufnahme 232 (korrekt) angeordnet ist.

Vorliegend umfasst die Gerätebasis 232 eine mit den Basiskontakten 236, 238 elektrisch gekoppelte Lesesteuerung 226. Insbesondere ist die Lesesteuerung 226 vorliegend über ein Filter- und Anpassungsnetzwerk 240 mit den Basiskontakten 236, 238 gekoppelt. Die Lesesteuerung 226 kann insbesondere in der Gerätesteuerung des Küchengeräts 230 integriert sein. Bei Varianten der Anmeldung kann die Detektionseinrichtung auch in dem Topf integriert sein. Die Detektionseinrichtung kann beispielsweise im Topf integriert sein, falls der Topf mit einer intelligenten Schnittstelle ausgestattet ist und in dem Topf ein entsprechender (kleiner) Controller integriert ist.

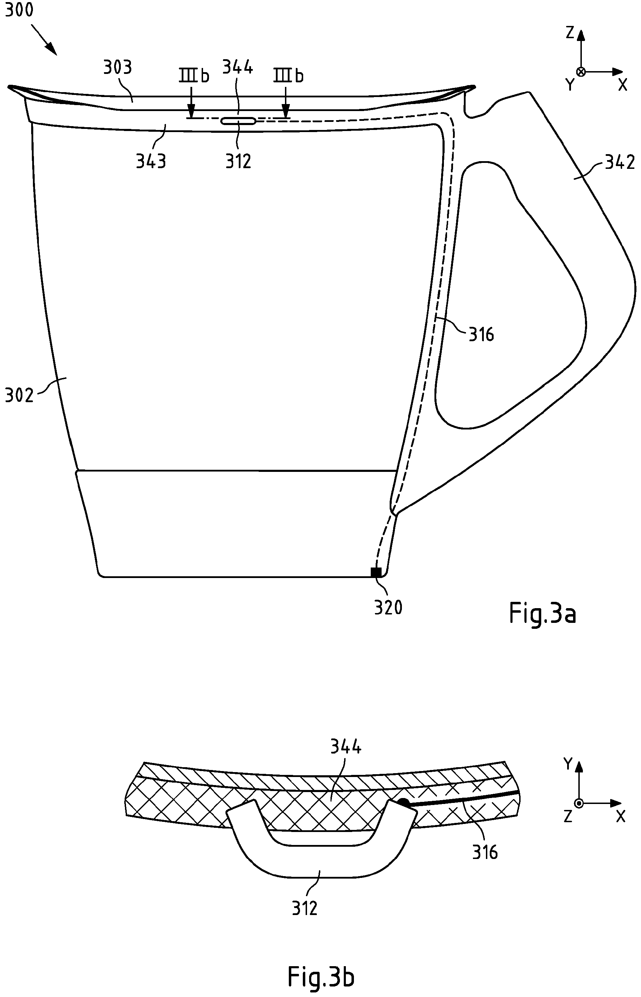

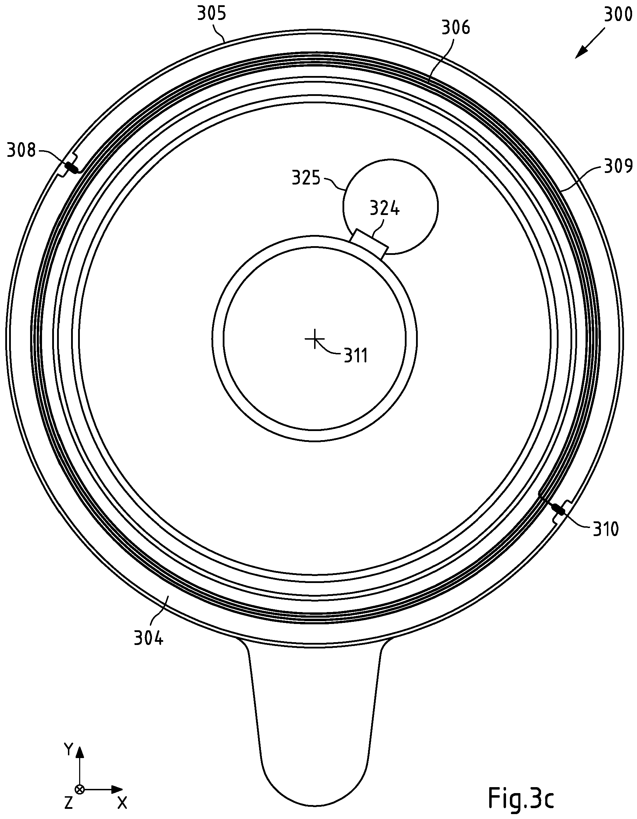

Die Figur 3a zeigt eine schematische Seitenansicht eines Ausführungsbeispiels eines Topfs 302 einer Gefäßanordnung 300 gemäß der vorliegenden Anmeldung und die Figur 3c eine schematische Draufsicht eines Ausführungsbeispiels eines zu dem Topf 302 strukturell korrespondierenden Deckels 304 der Gefäßanordnung 300 gemäß der vorliegenden Anmeldung. Die Figur 3b zeigt einen vergrößerten Ausschnitt, insbesondere ein Draufsicht, des Topfs 302 gemäß Figur 3a.

Der Topf 302 ist vorzugsweise teilweise aus Metall und teilweise aus Kunststoff gebildet. Insbesondere kann ein Abschnitt 342 aus Kunststoff gebildet sein. Dieser Abschnitt 342 kann auch den Griff bilden und insbesondere einen an dem Topfrand 303 angeordneten zumindest teilweise, vorzugsweise vollständigen ringförmigen Teilabschnitt 343 aufweisen.

An dem oberen Topfrand 303 ist ein erster oberer elektrischer Topfkontakt 312 angeordnet. Vorzugsweise an der gegenüberliegenden Seite des oberen Topfrands 303 ist der zweite obere (nicht gezeigter) elektrische Topfkontakt angeordnet.

Die erste elektrische Topfverbindung 316 verläuft von dem ersten oberen elektrischen Topfkontakt 312 insbesondere durch den Abschnitt 342 zu dem ersten unteren Topfkontakt 320. Insbesondere kann die erste Topfverbindung 316 in dem Kunststoffabschnitt 342 integriert sein. Der erste untere Topfkontakt 320 ist insbesondere in bzw. an dem Topfboden angeordnet. Die weitere (nicht gezeigte) Topfverbindung kann entsprechend ausgebildet sein.

Die oberen Topfkontakte 312 sind vorzugsweise in dem ringförmigen Teilabschnitt 343 aus Kunststoff eingebettet. Dieser Teilabschnitt 343 weist vorzugsweise einen Teil des Verriegelungsmechanismus auf. Insbesondere kann der Teilabschnitt 343 Konturen zur Verriegelung des Deckels 304 an dem Topf 302 in der definierten Verriegelungsposition aufweisen.

Wie der Draufsicht des zugehörigen Deckels 304 zu entnehmen ist, sind ein erster Deckelkontakt 308 und ein zweiter Deckelkontakt 310 an dem Deckel 304 angeordnet, insbesondere an dem äußeren Deckelrand 305.

Die Leseantenne 306 ist insbesondere eine (erste) Antennenspule 306. Insbesondere kann die Antennenspule 306 durch mindestens eine Windung 309 gebildet sein, vorzugsweise eine Mehrzahl von Windungen 309, wie dargestellt ist. Die mindestens eine Windung 309 kann insbesondere aus einem Metall gebildet sein, vorzugsweise aus Kupfer.

Wie aus der Figur 3c zu erkennen ist, verläuft die mindestens eine Windung 309 insbesondere entlang des Deckelrands 305 bzw. in der Nähe des Deckelrands 305 von dem ersten Deckelkontakt 308 zu dem zweiten Deckelkontakt 310. Der zweite Deckelkontakt 310 liegt insbesondere an einer dem ersten Deckelkontakt 308 gegenüberliegenden Seite des Deckelrands 305.

Die mindestens eine Windung 309 wird vorzugsweise bei der Fertigung in den Deckel-Grundkörper eingelegt und anschließend mit einer (nicht dargestellten) Abdeckung (vorzugsweise gebildet aus Kunststoff) versehen, welche z.B. per Ultraschallschweißen an dem Deckel-Grundkörper befestigt werden kann.

In dem vorliegenden Ausführungsbeispiel sind die jeweiligen Verbindungen zwischen dem Deckelkontakt und Topfkontakt kontaktbehaftete Verbindungen.

Die Deckelkontakte 308, 310 und die oberen Topfkontakte 312 sind in dem vorliegenden Ausführungsbeispiel als freiliegende elektrische Kontakte 308, 310, 312 gebildet. Vorzugsweise weisen die Deckelkontakte 308, 310 eine erste Längserstreckung in eine erste Richtung auf und der jeweils zugehörige obere Topfkontakt 312 eine zweite Längserstreckung in eine zweite Richtung. Wie zu erkennen ist, ist zwischen der ersten und der zweiten Richtung (die sich insbesondere in der gleichen Ebene befinden) ein Winkel zwischen 10° und 90° vorhanden, vorliegend insbesondere von ca. 90°. Mit anderen Worten, die Deckelkontakte 308, 310 verlaufen rechtwinklig zu den Topfkontakten 312. Beispielsweise verlaufen die Deckelkontakte 308, 310 in einer vertikalen Richtung, während die Topfkontakte 312 in einer horizontalen Richtung verlaufen (oder umgekehrt).

Die jeweiligen Kontakte 308, 310, 312 gleiten beim Bewegen des Deckels 304 von der unverriegelten Position in die verriegelte Position (was z.B. in Form einer Drehbewegung erfolgen kann) aufeinander ab bzw. kontaktbehaftet aneinander entlang. Hierdurch kann eine Beeinträchtigung des Übergangswiderstands an den jeweiligen Kontakten 308, 310, 312 verhindert werden, da evtl. an den Kontakten 308, 310, 312 anhaftende Verunreinigungen abgeschabt werden.

Darüber hinaus kann an dem Deckelkontakt 308, 310 oder Topfkontakt 312 eine Hinterfütterung 344 mit einem elastischen Material (z.B. Silikon) vorgesehen sein.

Der Deckeltransponder 324 ist in der Reichweite der Antennenspule 306 angeordnet. Insbesondere ist der Deckeltransponder 324 von der mindestens einen Windung 309 umgeben. Der Abstand des Deckeltransponders 324 zum Deckelmittelpunkt 311 ist vorliegend geringer als der Abstand der mindestens einen Windung 309 zum Deckelmittelpunkt 311.

Der Deckeltransponder 324 weist eine zweite Antennenspule 325 auf. Beispielsweise kann der Deckeltransponder angeklebt sein. Der Transponder 325, insbesondere die Antennenspule 325 kann durch eine nicht gezeigte Abdeckung, beispielsweise aus Kunststoff, abgedeckt sein.

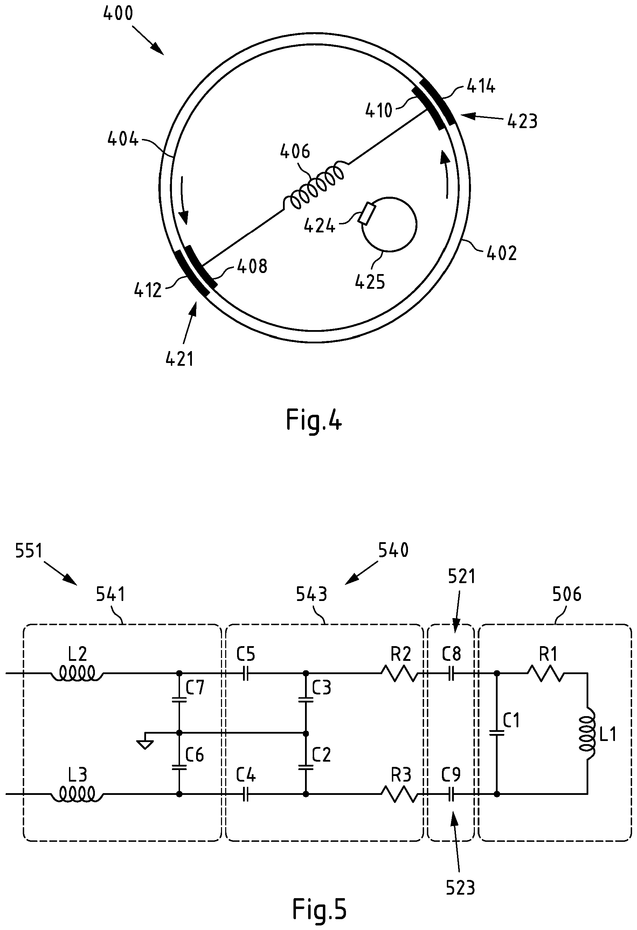

Die Figur 4 zeigt eine schematische Draufsicht eines weiteren Ausführungsbeispiels einer Gefäßanordnung 400 gemäß der vorliegenden Anmeldung. Insbesondere werden nachfolgend im Wesentlichen nur die Unterschiede zu den vorherigen Ausführungsbeispielen beschrieben und ansonsten auf die vorherigen Ausführungen verwiesen.

Ein wesentlicher Unterschied zu dem Ausführungsbeispiel nach Figuren 3a bis 3c ist, dass anstelle einer jeweiligen kontaktbehafteten elektrischen Verbindung zwischen einem Deckelkontakt und einem Topfkontakt vorliegend jeweils kontaktlose elektrische Verbindungen vorgesehen sind.

Der erste Deckelkontakt 408 ist vorliegend als ein erstes Deckelflächenelement 408 (z.B. durch eine Folie aus einem elektrisch leitfähigen Material, beispielsweise eine Metallfolie) und der zweite Deckelkontakt 410 als ein zweites Deckelflächenelement 410 (z.B. durch eine Folie aus einem elektrisch leitfähigen Material, beispielsweise eine Metallfolie) gebildet.

Der erste obere Topfkontakt 412 kann als ein erstes Topfflächenelement 412 (z.B. durch eine Folie aus einem elektrisch leitfähigen Material, beispielsweise eine Metallfolie) und der zweite obere Topfkontakt 414 (z.B. durch eine Folie aus einem elektrisch leitfähigen Material, beispielsweise eine Metallfolie) kann als ein zweites Topfflächenelement 414 gebildet sein.

In der dargestellten verriegelten Position des Deckels 404 können das erste Deckelflächenelement 408 und das erste Topfflächenelement 412 einen ersten Koppelkondensator 421 bilden. Das zweite Deckelflächenelement 410 und das zweite Topfflächenelement 414 können einen zweiten Koppelkondensator 423 bilden.

Insbesondere bilden die genannten Flächenelemente 408, 410, 412, 414 nur in der verriegelten Position des Deckels 404 einen jeweiligen Koppelkondensator 421, 423.

Mit anderen Worten kann nur in der verriegelten Position das durch die Lesesteuerung bereitgestellte Antennensignal an die Leseantenne 406 (z.B. eine (schematisch angedeutete) Antennenspule) über die genannten Koppelkondensatoren 421, 423 übertragen werden.

Das Dielektrikum des jeweiligen Koppelkondensators 421, 423 wird insbesondere durch Luft und/oder den verwendeten Kunststoff bestimmt.

Die Figur 5 zeigt ein Beispiel eines Ersatzschaltbilds eines Gesamtnetzwerks 551 einer Gefäßanordnung gemäß der vorliegenden Anmeldung. Insbesondere ist das Gesamtnetzwerk 551 aus Sicht der Lesesteuerung dargestellt.

Wie zu erkennen ist, umfasst das dargestellte Gesamtnetzwerk 551 ein Filter- und Anpassungsnetzwerk 540, das aus einem Filternetzwerk 541 und einem Anpassungsnetzwerk 543 gebildet ist, die Koppelkondensatoren 521, 523 und die Antennenspule 506. L bezeichnet hierbei eine Induktivität, C eine Kapazität und R einen Widerstand.

Insbesondere abhängig davon, ob das Filter- und Anpassungsnetzwerk 540 in der Gerätebasis, im Topf und/oder im Deckel angeordnet ist, kann die sich ausbildende Kapazität der Koppelkondensatoren 521, 523 bzw. C₈, C₉ in unterschiedlicher Art zur Gesamtimpedanz beitragen.

Befindet sich das Filter- und Anpassungsnetzwerk 540 in der Gerätebasis oder im Topf, entstehen die abgebildeten Kapazitäten C₈ und C₉. Befindet sich das Filter- und Anpassungsnetzwerk 540 im Deckel, trägt die Kapazität zu den vorhandenen Kapazitäten C₅ und C₄ bei. C₈ und C₉ entfallen in diesem Fall. Die Geometrie der jeweiligen Kondensatorelektroden bzw. Deckel- und Topfkontakte ist insbesondere so ausgelegt, dass die Gesamtimpedanz im Toleranzband der spezifizierten Ausgangsimpedanz der Lesesteuerung, also insbesondere des RFID-Lesers, liegt, wenn sich der Deckel im Verriegelungszustand befindet.

Im Falle von kontaktbehafteten Verbindungen zwischen Topf und Deckel entfallen die Koppelkondensatoren C₈ und C₉. Eine Rückwirkung auf C₄ und C₅ entfällt ebenfalls, so dass dieses Konzept aus elektronischer Sicht einfacher zu realisieren und insbesondere robuster ist.

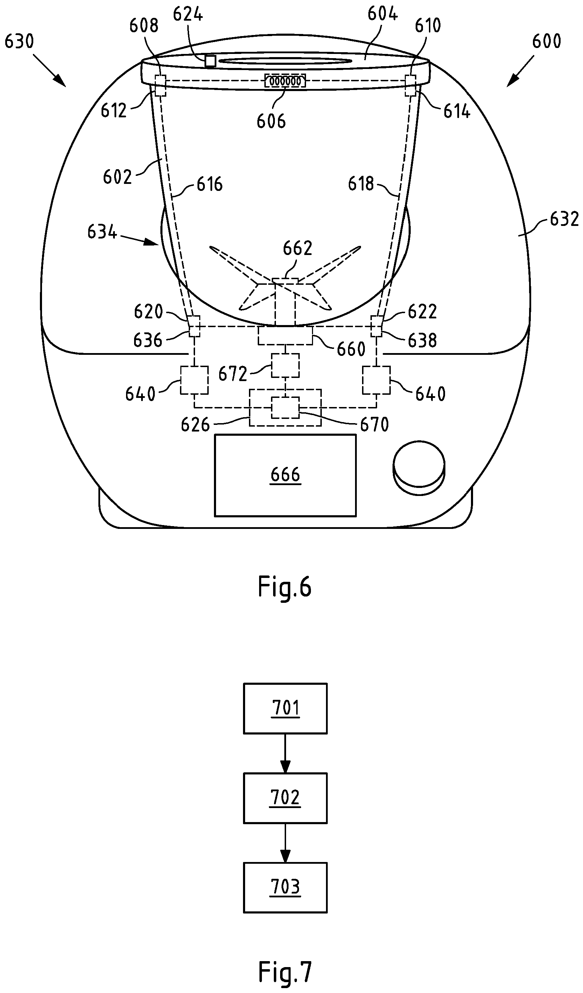

Die Figur 6 zeigt eine schematische Ansicht eines weiteren Ausführungsbeispiels eines Küchengeräts 630 gemäß der vorliegenden Anmeldung. Zur Vermeidung von Wiederholungen werden nachfolgend im Wesentlichen nur die Unterschiede zu den vorherigen Ausführungsbeispielen beschrieben und ansonsten auf die vorherigen Ausführungen verwiesen.

Wie zu erkennen ist, weist die Gerätebasis 632 einen Werkzeugantrieb 660 auf. Der Werkzeugantrieb 660 ist zum Antreiben bzw. Betreiben eines Küchengerätewerkzeugs 662 eingerichtet, welches sich insbesondere in dem Topf 602 befinden kann. Beispielhaft ist als Küchengerätewerkzeug 662 ein Schneidwerkzeug 662 dargestellt. Weiter kann die Küchenbasis eine Steuereinrichtung umfassen, die beispielsweise eine Heizung, die im Topf 602 integriert ist, ansteuert und überwacht.

Die Lesesteuerung 626 umfasst vorliegend insbesondere ein Auswertemodul 670. Das Auswertemodul 670 ist insbesondere eingerichtet zum Detektieren eines Verriegelungszustands des Deckels 604, basierend auf einem lesbaren Transponder 624. Beispielsweise kann der Deckel 604 durch einen Nutzer in den verriegelten Zustand bewegt werden. Sobald der Deckel 604 in der verriegelten Position ist, werden eine elektrische Verbindung zwischen dem ersten Deckelkontakt 608 und dem ersten oberen Topfkontakt 612 und eine elektrische Verbindung zwischen dem zweiten Deckelkontakt 610 und dem zweiten oberen Topfkontakt 614 hergestellt. Über die hergestellten Verbindungen wird ein Antennensignal durch die Lesesteuerung 626 an die Leseantenne 606 angelegt, so dass insbesondere ein Lesefeld generiert und ausgesendet wird.

Der in Reichweite angeordnete Transponder 624 empfängt das Lesefeld und extrahiert insbesondere die darin enthaltenen Instruktionen. Basierend auf den Instruktionen generiert der Transponder 624 eine Antwort. Beispielsweise gibt der Transponder 624 die gespeicherten Daten aus, wie eine Deckelkennung und/oder eine Deckeltypkennung. Insbesondere beeinflusst der Transponder 624 das Lesefeld entsprechend. Dies kann durch die Lesesteuerung 626 erfasst werden, so dass die gespeicherten Daten ausgelesen werden, also insbesondere die Deckelkennung und/oder eine Deckeltypkennung.

Abhängig davon, ob ein Transponder auslesbar ist oder nicht, wird der Verriegelungszustand bestimmt. Denn da die Verbindungen zu der Leseantenne 606 erst dann (und nur dann) hergestellt werden, wenn sich der Deckel 604 in der verriegelten Position befindet, kann durch Auslesen des Transponders 624 bzw. Tags 624 auf den Verriegelungszustand geschlossen werden:
- RFID-Tag nicht lesbar: Deckelzustand nicht verriegelt;
- RFID-Tag lesbar: Deckelzustand verriegelt.

Ferner umfasst vorliegend die Gerätebasis 632 ein Freigabemodul 672. Das Freigabemodul 672 ist insbesondere eingerichtet zum Freigeben mindestens einer Gerätefunktion nur bei Detektion des Verriegelungszustands des Deckels 604. Das Freigabemodul 672 kann insbesondere mit dem Auswertemodul 670 kommunikativ verbunden sein. Wenn kein Verriegelungszustand detektiert wird, bleibt die mindestens eine Gerätefunktion gesperrt. Beispielhafte und nicht abschließende Küchengerätefunktionen bzw. Gerätefunktion sind eine erste Schneidfunktion mit einer ersten maximal zulässigen Solldrehzahl und/oder Solldrehmoment, eine weitere Schneidfunktion mit einer zweiten (sich von der ersten maximal zulässigen Solldrehzahl und/oder Solldrehmoment unterscheidenden) maximal zulässigen Solldrehzahl und/oder Solldrehmoment, eine erste Rührfunkton mit einer ersten maximal zulässigen Solldrehzahl und/oder Solldrehmoment, eine weitere Rührfunkton mit einer zweiten (sich von der ersten maximal zulässigen Solldrehzahl und/oder Solldrehmoment unterscheidenden) maximal zulässigen Solldrehzahl und/oder Solldrehmoment, ein erste Motordrehrichtung, eine zweite entgegengesetzte Motordrehrichtung, eine erste Solltemperatur und/oder ein erster Solltemperaturbereich einer in dem Speiseaufnahmeelement integrierten Heizung, eine zweite (sich von der ersten Solltemperatur unterscheidenden) Solltemperatur und/oder ein zweiter (sich von dem ersten Solltemperaturbereich unterscheidenden) Solltemperaturbereich einer in dem Speiseaufnahmeelement integrierten Heizung, Steuerprogramme und/oder Steuerprogrammsollparameter für bestimmte Operationen etc.

Vorzugsweise kann das Auswertemodul 670 zusätzlich eingerichtet sein zum Bestimmen des Deckeltyps, basierend auf den ausgelesenen Daten, insbesondere der Deckeltypkennung und einem gespeicherten Deckeltypkriterium. Vorzugsweise kann das Deckeltypkriterium eine zuvor beschriebene Zuordnungstabelle sein. Insbesondere kann in der Zuordnungstabelle zusätzlich für jeden Deckeltyp die mindestens eine bei diesem Deckeltyp zulässige Gerätefunktion gespeichert sein. Insbesondere kann nach einem Bestimmen des Deckeltyps die mindestens eine für diesen Deckeltyp zulässige Gerätefunktion durch das Freigabemodul 672 freigegeben werden. Der Deckeltyp und optional die zulässige Gerätefunktion kann insbesondere durch Vergleichen der ausgelesenen Deckeltypkennung mit den in der Zuordnungstabelle gespeicherten Deckeltypkennungen bestimmt werden.

Die zulässige Gerätefunktion kann beispielsweise einen maximal zulässigen Antriebssollparameterwert umfassen. Ein Freigeben einer Gerätefunktion kann insbesondere ein Beschränken, beispielsweise durch das Freigabemodul 672, des Betreibens des Werkzeugantriebs 660 auf den für diesen Deckeltyp gespeicherten Antriebssollparameterwert (z.B. eine maximal zulässige Solldrehzahl und/oder ein maximal zulässiges Drehmoment) umfassen.

Optional kann das Küchengerät 630 über eine (optische) Anzeige 666 verfügen, beispielsweise ein Display. Die Anzeige 666 kann eingerichtet sein zum Anzeigen des identifizierten Deckeltyps. Optional kann eine Fehlermeldung (beispielweise wenn ein Verriegelungszustand detektiert wurde, jedoch kein Deckeltyp bestimmt werden konnte) und/oder eine Hinweismeldung (z.B. eine Aufforderung zur Reinigung) angezeigt werden.

Wenn ein Zubehörteil mit dem Deckel 604 gekoppelt ist, kann ein Zubehörtransponder des Zubehörteils zusätzlich durch die Leseantenne 606 ausgelesen werden. Der Zubehörtyp kann bestimmt werden, beispielsweise durch das Auswertemodul 670, insbesondere in analoger Weise wie der Deckeltyp.

Das Freigabemodul 672 kann ferner eingerichtet sein zum Freigeben der Gerätefunktion, (zusätzlich) basierend auf dem bestimmten Zubehörtyp und einem Zubehörtypkriterium (z.B. eine Zuordnungstabelle, in der jeder Zubehörkennung mindestens eine zugelassene Gerätefunktion zugeordnet sein kann). Das Zubehörtypkriterium kann in einem durch das Freigabemodul 672 zugreifbaren Datenspeicher der Gerätebasis 632 gespeichert sein. Abhängig von dem ausgelesenen Zubehörteiltyp und dem (vordefinierten) Zubehörtypkriterium kann nur die mindestens eine Gerätefunktion freigegeben werden, die für diesen Zubehörteiltyp zulässig ist.

Die Funktionsweise einer Gefäßanordnung, wie die Gefäßanordnung 600 und insbesondere des Küchengeräts 630, wird nachfolgend näher mit Hilfe der Figur 7 beschrieben. Die Figur 7 zeigt ein Diagramm eines Ausführungsbeispiels eines Verfahrens gemäß der vorliegenden Anmeldung. Das Verfahren wird verwendet zum Bestimmen bzw. Detektieren eines Verriegelungszustands, beispielsweise bei der Gefäßanordnung 600 des Küchengeräts 630.

In einem ersten Schritt 701 erfolgt ein Detektieren, durch eine Lesesteuerung, des Verriegelungszustands der Gefäßanordnung, basierend auf einem lesbaren Transponder (bzw. abhängig davon, ob ein Transponder auslesbar ist (oder nicht)), wie bereits beschrieben wurde.

In einem optionalen Schritt 702 kann ein Bestimmen des Deckeltyps des in der verriegelten Position befindlichen Deckels erfolgen, basierend auf den ausgelesenen Daten des Transponders und insbesondere einem Deckeltypkriterium, wie bereits beschrieben wurde.

In einem optionalen weiteren Schritt 703 erfolgt ein Freigeben einer Gerätefunktion, abhängig von dem detektierten Verriegelungszustand des Deckels und optional abhängig von dem bestimmten Deckeltyp, wie bereits beschrieben wurde.

### Bezugszeichenliste

- 100, 200, 300, 400, 600: Gefäßanordnung
- 102, 202, 302, 402, 602: Speisenaufnahmeelement, insbesondere Topf
- 303: Topfrand
- 104, 204, 304, 404, 604: Deckel
- 305: Deckelrand
- 106, 206, 306, 406, 606: Leseantenne
- 108, 208, 308, 408, 608: erster Deckelkontakt
- 309: Windung
- 110, 210, 310, 410, 610: zweiter Deckelkontakt
- 112, 212, 312, 412, 612: erster oberer Topfkontakt
- 114, 214, 414, 614: zweiter oberer Topfkontakt
- 116, 216, 316, 616: erste Topfverbindung
- 118, 218, 618: zweite Topfverbindung
- 120, 220, 320, 620: erster unterer Topfkontakt
- 421, 521: Koppelkondensator
- 122, 222, 622,: zweiter unterer Topfkontakt
- 423, 523: Koppelkondensator
- 124, 224, 324, 424, 624: Transponder
- 325: zweite Antennenspule
- 126, 226, 626: Lesesteuerung
- 230,630: Küchengerät
- 232, 632: Gerätebasis
- 234, 634: Topfaufnahme
- 236, 636: erster Basiskontakt
- 238, 638: zweiter Basiskontakt
- 240, 540, 640: Filter- und Anpassungsnetzwerk
- 541: Filternetzwerk
- 342: Topfabschnitt
- 343: ringförmiger Teilabschnitt des Topfabschnitts
- 344: Hinterfütterung
- 545: Anpassungsnetzwerk
- 551: Gesamtnetzwerk
- 660: Werkzeugantrieb
- 662: Küchengerätwerkzeug
- 666, 766: Anzeige
- 670: Auswertemodul
- 672: Freigabemodul

## Patentansprüche

1. Gefäßanordnung (100, 200, 300, 400, 600) für ein Küchengerät (230, 630), umfassend:
- ein Speiseaufnahmeelement (102, 202, 302, 402, 602), und
- mindestens einen Deckel (104, 204, 304, 404, 604), eingerichtet zum Verschließen einer Öffnung des Speiseaufnahmeelements (104, 204, 304, 404, 604),
- wobei der Deckel (104, 204, 304, 404, 604) relativ zu dem Speiseaufnahmeelement (102, 202, 302, 402, 602) zwischen einer ersten Betriebsposition und einer zweiten sich von der ersten Betriebsposition unterscheidenden Betriebsposition bewegbar ist,
- wobei das Speiseaufnahmeelement (102, 202, 302, 402, 602) mindestens eine erste zwischen einem ersten oberen Topfkontakt (112, 212, 312, 612) und einem ersten unteren Topfkontakt (120, 220, 320, 620) verlaufende Topfverbindung (116, 216, 316, 616) und eine zweite zwischen einem zweiten oberen Topfkontakt (114, 214, 614) und einem zweiten unteren Topfkontakt (122, 222, 622) verlaufende Topfverbindung (118, 218, 618) aufweist,
- wobei der erste untere Topfkontakt (120, 220, 320, 620) und der zweite untere Topfkontakt (122, 222, 622) eingerichtet sind zum elektrischen Verbinden mit einer Lesesteuerung (126, 226, 626),
- wobei der erste Deckelkontakt (108, 208, 308, 408, 608) und der zweite Deckelkontakt (110, 210, 310, 410, 610) angeordnet sind, derart, dass eine elektrische Verbindung zwischen dem ersten Deckelkontakt (108, 208, 308, 408, 608) und dem ersten oberen Topfkontakt (112, 212, 312, 612) und eine elektrische Verbindung zwischen dem zweiten Deckelkontakt (110, 210, 310, 410, 610) und dem zweiten oberen Topfkontakt (114, 214, 614) nur in der zweiten Betriebsposition hergestellt werden,
**dadurch gekennzeichnet, dass**
- der Deckel (104, 204, 304, 404, 604) mindestens eine mit einem ersten Deckelkontakt (108, 208, 308, 408, 608) und einem zweiten Deckelkontakt (110, 210, 310, 410, 610) verbundene Leseantenne (106, 206, 306, 406, 606) aufweist, und
- der Deckel (104, 204, 304, 404, 604) mindestens einen in Reichweite der Leseantenne (106, 206, 306, 406, 606) angeordneten Transponder (124, 224, 324, 424, 624) aufweist.

2. Gefäßanordnung (100, 200, 300, 400, 600) nach Anspruch 1, wobei
- die Leseantenne (106, 206, 306, 406, 606) eine erste Antennenspule umfasst, und
- der Transponder (124, 224, 324, 424, 624) ein passiver oder ein aktiver Transponder (124, 224, 324, 424, 624) mit einer zweiten Antennenspule (325) ist.

3. Gefäßanordnung (100, 200, 300, 400, 600) nach Anspruch 1 oder 2, wobei
- die elektrische Verbindung zwischen dem ersten Deckelkontakt (108, 208, 308, 408, 608) und dem ersten oberen Topfkontakt (112, 212, 312, 612) und/oder die elektrische Verbindung zwischen dem zweiten Deckelkontakt (110, 210, 310, 410, 610) und dem zweiten oberen Topfkontakt (114, 214, 614) eine kontaktbehaftete elektrische Verbindung ist/sind.

4. Gefäßanordnung (100, 200, 300, 400, 600) nach einem der vorherigen Ansprüche, wobei
- die elektrische Verbindung zwischen dem ersten Deckelkontakt (108, 208, 308, 408, 608) und dem ersten oberen Topfkontakt (112, 212, 312, 612) und/oder die elektrische Verbindung zwischen dem zweiten Deckelkontakt (110, 210, 310, 410, 610) und dem zweiten oberen Topfkontakt (114, 214, 614) eine kontaktlose elektrische Verbindung ist/sind.

5. Gefäßanordnung (100, 200, 300, 400, 600) nach Anspruch 4, wobei
- der erste Deckelkontakt (108, 208, 308, 408, 608) als ein erstes Deckelflächenelement (108, 208, 308, 408, 608) und der zweite Deckelkontakt (110, 210, 310, 410, 610) als ein zweites Deckelflächenelement (110, 210, 310, 410, 610) gebildet sind,
- der erste obere Topfkontakt (112, 212, 312, 612) als ein erstes Topfflächenelement (112, 212, 312, 612) und der zweite obere Topfkontakt (114, 214, 614) als ein zweites Topfflächenelement (114, 214, 614) gebildet sind, und
- in der zweiten Betriebsposition des Deckels (104, 204, 304, 404, 604) das erste Deckelflächenelement (108, 208, 308, 408, 608) und das erste Topfflächenelement (112, 212, 312, 612) einen ersten Koppelkondensator (421) und das zweite Deckelflächenelement (110, 210, 310, 410, 610) und das zweite Topfflächenelement (114, 214, 614) einen zweiten Koppelkondensator (423) bilden.

6. Gefäßanordnung (100, 200, 300, 400, 600) nach einem der vorherigen, wobei
- der Transponder (124, 224, 324, 424, 624) mindestens einen auslesbaren Speicher umfasst,
- wobei in dem Speicher zumindest eine Deckelkennung und/oder eine Deckeltypkennung gespeichert ist/sind.

7. Gefäßanordnung (100, 200, 300, 400, 600) nach einem der vorherigen, wobei
- die Gefäßanordnung (100, 200, 300, 400, 600) mindestens ein mit dem Speiseaufnahmeelement (102, 202, 302, 402, 602) und/oder dem Deckel (104, 204, 304, 404, 604) koppelbares Zubehörteil umfasst,
- wobei das Zubehörteil mindestens einen Zubehörtransponder umfasst.

8. Gefäßanordnung (100, 200, 300, 400, 600) nach Anspruch 7, wobei
- der Zubehörtransponder an dem Zubehörteil angeordnet ist, derart, dass der Zubehörtransponder in einem Kopplungszustand des Zubehörteils mit dem Deckel in Reichweite der Leseantenne (106, 206, 306, 406, 606) ist.

9. Gefäßanordnung (100, 200, 300, 400, 600) nach einem der vorherigen Ansprüche, wobei
- der erste Deckelkontakt (108, 208, 308, 408, 608) und der zweite Deckelkontakt (110, 210, 310, 410, 610) an im Wesentlichen gegenüberliegenden Seiten des Deckelrands angeordnet sind, und
- der erste obere Topfkontakt (112, 212, 312, 612) und der zweite obere Topfkontakt an im Wesentlichen gegenüberliegenden Seiten des Topfrands (114, 214, 614) angeordnet sind.

10. Küchengerät (230, 630), umfassend:
- eine Gefäßanordnung (100, 200, 300, 400, 600) nach einem der vorherigen Ansprüche, und
- eine Gerätebasis (232, 632), umfassend eine mit einem ersten Basiskontakt (236, 636) und einem zweiten Basiskontakt (238, 638) elektrisch gekoppelte Lesesteuerung (126, 226, 626),
- wobei der erste Basiskontakt (236, 636) mit dem ersten unteren Topfkontakt (120, 220, 320, 620) und der zweite Basiskontakt (238, 638) mit dem zweiten unteren Topfkontakt (122, 222, 622) elektrisch verbindbar sind.

11. Küchengerät (230, 630) nach Anspruch 10, wobei
- die Lesesteuerung (126, 226, 626) ein Auswertemodul (670) umfasst, eingerichtet zum Detektieren einer Betriebsposition des Deckels (104, 204, 304, 404, 604), basierend auf dem lesbaren Transponder.

12. Küchengerät (230, 630) nach Anspruch 10 oder 11, wobei
- das Auswertemodul (670) eingerichtet ist zum Bestimmen des Deckeltyps, basierend auf einer erhaltenen Deckelkennung und/oder Deckeltypkennung.

13. Küchengerät (230, 630) nach einem der Ansprüche 10 bis 12, wobei
- die Gerätebasis (232, 632) ein zwischen der Lesesteuerung (126, 226, 626) und dem ersten Basiskontakt (236, 636) und dem zweiten Basiskontakt (238, 638) angeordnetes Filter- und Anpassungsnetzwerk (240, 640) umfasst.

14. Küchengerät (230, 630) nach einem der Ansprüche 11 bis 13, wobei
- die Gerätebasis (232, 632) ein Freigabemodul (672) umfasst, eingerichtet zum Freigeben einer Gerätefunktion des Küchengeräts (230, 630) nur bei Detektion der Betriebsposition des Deckels (104, 204, 304, 404, 604).

15. Verfahren zum Bestimmen einer Betriebsposition eines Deckels (104, 204, 304, 404, 604) bei einer Gefäßanordnung (100, 200, 300, 400, 600) nach einem der Ansprüche 1 bis 9, umfassend:
- Detektieren, durch eine Lesesteuerung (126, 226, 626), der Betriebsposition des Deckels (104, 204, 304, 404, 604), basierend auf dem lesbaren Transponder.

## Claims

1. A container arrangement (100, 200, 300, 400, 600) for a kitchen appliance (230, 630) comprising:
- a food receiving element (102, 202, 302, 402, 602), and
- at least one lid (104, 204, 304, 404, 604) configured to close an opening of the food receiving element (104, 204, 304, 404, 604),
- wherein the lid (104, 204, 304, 404, 604) is movable relative to the food receiving element (102, 202, 302, 402, 602) between a first operating position and a second operating position different from the first operating position,
- wherein the food receiving element (102, 202, 302, 402, 602) comprises at least a first pot connection (116, 216, 316, 616) extending between a first upper pot contact (112, 212, 312, 612) and a first lower pot contact (120, 220, 320, 620) and a second pot connection (118, 218, 618) extending between a second upper pot contact (114, 214, 614) and a second lower pot contact (122, 222, 622),
- wherein the first lower pot contact (120, 220, 320, 620) and the second lower pot contact (122, 222, 622) are configured to electrically connect to a reading controller (126, 226, 626),
- wherein the first lid contact (108, 208, 308, 408, 608) and the second lid contact (110, 210, 310, 410, 610) are arranged such that an electrical connection is established between the first lid contact (108, 208, 308, 408, 608) and the first upper pot contact (112, 212, 312, 612) and an electrical connection is established between the second lid contact (110, 210, 310, 410, 610) and the second upper pot contact (114, 214, 614) only in the second operating position
**characterized in that**
- the lid (104, 204, 304, 404, 604) comprises at least one reading antenna (106, 206, 306, 406, 606) connected to a first lid contact (108, 208, 308, 408, 608) and a second lid contact (110, 210, 310, 410, 610), and
- the lid (104, 204, 304, 404, 604) comprises at least one transponder (124, 224, 324, 424, 624) positioned within range of the reading antenna (106, 206, 306, 406, 606).

2. The container arrangement (100, 200, 300, 400, 600) according to claim 1,
**wherein**
- the reading antenna (106, 206, 306, 406, 606) comprises a first antenna coil, and
- the transponder (124, 224, 324, 424, 624) is a passive or an active transponder (124, 224, 324, 424, 624) with a second antenna coil (325).

3. The container arrangement (100, 200, 300, 400, 600) according to claim 1 or 2,
**wherein**
- the electrical connection between the first lid contact (108, 208, 308, 408, 608) and the first upper pot contact (112, 212, 312, 612) and/or the electrical connection between the second lid contact (110, 210, 310, 410, 610) and the second upper pot contact (114, 214, 614) is/are a contact based electrical connection.

4. The container arrangement (100, 200, 300, 400, 600) according to any one of the preceding claims, **wherein**
- the electrical connection between the first lid contact (108, 208, 308, 408, 608) and the first upper pot contact (112, 212, 312, 612) and/or the electrical connection between the second lid contact (110, 210, 310, 410, 610) and the second upper pot contact (114, 214, 614) is/are a contactless electrical connection.

5. The container arrangement (100, 200, 300, 400, 600) according to claim 4,
**wherein**
- the first lid contact (108, 208, 308, 408, 608) is formed as a first lid surface element (108, 208, 308, 408, 608) and the second lid contact (110, 210, 310, 410, 610) is formed as a second lid surface element (110, 210, 310, 410, 610),
- the first upper pot contact (112, 212, 312, 612) is formed as a first pot surface element (112, 212, 312, 612) and the second upper pot contact (114, 214, 614) is formed as a second pot surface element (114, 214, 614), and
- in the second operating position of the lid (104, 204, 304, 404, 604), the first lid surface element (108, 208, 308, 408, 608) and the first pot surface element (112, 212, 312, 612) form a first coupling capacitor (421) and the second lid surface element (110, 210, 310, 410, 610) and the second pot surface element (114, 214, 614) form a second coupling capacitor (423).

6. The container arrangement (100, 200, 300, 400, 600) according to one of the previous, **wherein**
- the transponder (124, 224, 324, 424, 624) comprises at least one readable memory,
- wherein at least one lid identifier and/or lid type identifier is/are stored in the memory.

7. The container arrangement (100, 200, 300, 400, 600) according to one of the previous, **wherein**
- the container arrangement (100, 200, 300, 400, 600) comprises at least one accessory couplable to the food receiving element (102, 202, 302, 402, 602) and/or the lid (104, 204, 304, 404, 604),
- wherein the accessory comprises at least one accessory transponder.

8. The container arrangement (100, 200, 300, 400, 600) according to claim 7,
**wherein**
- the accessory transponder is arranged on the accessory such that the accessory transponder is within range of the reading antenna (106, 206, 306, 406, 606) in a coupled state of the accessory with the lid.

9. The container arrangement (100, 200, 300, 400, 600) according to any one of the preceding claims, **wherein**
- the first lid contact (108, 208, 308, 408, 608) and the second lid contact (110, 210, 310, 410, 610) are arranged on substantially opposite sides of the lid edge, and
- the first upper pot contact (112, 212, 312, 612) and the second upper pot contact are arranged on substantially opposite sides of the pot edge (114, 214, 614).

10. A kitchen appliance (230, 630), comprising:
- a container arrangement (100, 200, 300, 400, 600) according to any one of the preceding claims, and
- an appliance base (232, 632) comprising a reading controller (126, 226, 626) electrically coupled to a first base contact (236, 636) and a second base contact (238, 638),
- wherein the first base contact (236, 636) is electrically connectable to the first lower pot contact (120, 220, 320, 620) and the second base contact (238, 638) is electrically connectable to the second lower pot contact (122, 222, 622).

11. The kitchen appliance (230, 630) according to claim 10, **wherein**
- the reading controller (126, 226, 626) comprises an evaluation module (670) configured to detect an operating position of the lid (104, 204, 304, 404, 604) based on the readable transponder.

12. The kitchen appliance (230, 630) according to claim 10 or 11, **wherein**
- the evaluation module (670) is configured to determine the lid type based on a received lid identifier and/or lid type identifier.

13. The kitchen appliance (230, 630) according to any one of claims 10 to 12,
**wherein**
- the appliance base (232, 632) comprises a filtering and matching network (240, 640) arranged between the reading controller (126, 226, 626) and the first base contact (236, 636) and the second base contact (238, 638).

14. The kitchen appliance (230, 630) according to any one of claims 11 to 13,
**wherein**
- the appliance base (232, 632) comprises a release module (672) configured to release an appliance function of the kitchen appliance (230, 630) only upon detection of the operating position of the lid (104, 204, 304, 404, 604).

15. A method of determining an operating position of a lid (104, 204, 304, 404, 604) in a container arrangement (100, 200, 300, 400, 600) according to any one of claims 1 to 9, comprising:
- detecting, by a reading controller (126, 226, 626), the operating position of the lid (104, 204, 304, 404, 604) based on a readable transponder.

## Revendications

1. Agencement de récipient (100, 200, 300, 400, 600) pour un appareil de cuisine (230, 630), comprenant :
- un élément de réception de nourriture (102, 202, 302, 402, 602), et
- au moins un couvercle (104, 204, 304, 404, 604) configuré pour fermer une ouverture de l'élément de réception de nourriture (104, 204, 304, 404, 604),
- où le couvercle (104, 204, 304, 404, 604) est mobile par rapport à l'élément de réception de nourriture (102, 202, 302, 402, 602) entre une première position de fonctionnement et une deuxième position de fonctionnement différente de la première position de fonctionnement,
- où l'élément de réception de nourriture (102, 202, 302, 402, 602) comprend au moins une première connexion de pot (116, 216, 316, 616) s'étendant entre un premier contact supérieur de pot (112, 212, 312, 612) et un premier contact inférieur de pot (120, 220, 320, 620) et une seconde connexion de pot (118, 218, 618) s'étendant entre un second contact supérieur de pot (114, 214, 614) et un second contact inférieur de pot (122, 222, 622),
- où le premier contact inférieur de pot (120, 220, 320, 620) et le deuxième contact inférieur de pot (122, 222, 622) sont configurés pour être connectés électriquement à une commande de lecture (126, 226, 626),
- où le premier contact de couvercle (108, 208, 308, 408, 608) et le deuxième contact de couvercle (110, 210, 310, 410, 610) sont disposés de telle sorte qu'une connexion électrique entre le premier contact de couvercle (108, 208, 308, 408, 608) et le premier contact supérieur de pot (112, 212, 312, 612) et une connexion électrique entre le deuxième contact de couvercle (110, 210, 310, 410, 610) et le deuxième contact supérieur de pot (114, 214, 614) ne sont établies que dans la deuxième position de fonctionnement,
**caractérisé en ce que**
- le couvercle (104, 204, 304, 404, 604) présente au moins une antenne de lecture (106, 206, 306, 406, 606) reliée à un premier contact de couvercle (108, 208, 308, 408, 608) et à un deuxième contact de couvercle (110, 210, 310, 410, 610), et
- le couvercle (104, 204, 304, 404, 604) présente au moins un transpondeur (124, 224, 324, 424, 624) disposé à portée de l'antenne de lecture (106, 206, 306, 406, 606).

2. Agencement de récipient (100, 200, 300, 400, 600) selon la revendication 1,
- l'antenne de lecture (106, 206, 306, 406, 606) comprend une première bobine d'antenne, et
- le transpondeur (124, 224, 324, 424, 624) est un transpondeur passif ou un transpondeur actif (124, 224, 324, 424, 624) avec une deuxième bobine d'antenne (325).

3. Agencement de récipient (100, 200, 300, 400, 600) selon la revendication 1 ou 2,
- où la connexion électrique entre le premier contact de couvercle (108, 208, 308, 408, 608) et le premier contact supérieur de pot (112, 212, 312, 612) et/ou la connexion électrique entre le deuxième contact de couvercle (110, 210, 310, 410, 610) et le deuxième contact supérieur de pot (114, 214, 614) est/sont une connexion électrique avec contact.

4. Agencement de récipient (100, 200, 300, 400, 600) selon l'une quelconque des revendications précédentes, où
- la connexion électrique entre le premier contact de couvercle (108, 208, 308, 408, 608) et le premier contact supérieur de pot (112, 212, 312, 612) et/ou la connexion électrique entre le deuxième contact de couvercle (110, 210, 310, 410, 610) et le deuxième contact supérieur de pot (114, 214, 614) est/sont une connexion électrique sans contact.

5. Agencement de récipient (100, 200, 300, 400, 600) selon la revendication 4, où
- le premier contact de couvercle (108, 208, 308, 408, 608) est formé comme un premier élément de surface de couvercle (108, 208, 308, 408, 608) et le deuxième contact de couvercle (110, 210, 310, 410, 610) est formé comme un deuxième élément de surface de couvercle (110, 210, 310, 410, 610),
- le premier contact supérieur de pot (112, 212, 312, 612) est formé comme un premier élément de surface de pot (112, 212, 312, 612) et le deuxième contact supérieur de pot (114, 214, 614) est formé comme un deuxième élément de surface de pot (114, 214, 614), et
- dans la seconde position de fonctionnement du couvercle (104, 204, 304, 404, 604), le premier élément de surface de couvercle (108, 208, 308, 408, 608) et le premier élément de surface de pot (112, 212, 312, 612) forment un premier condensateur de couplage (421) et le second élément de surface de couvercle (110, 210, 310, 410, 610) et le second élément de surface de pot (114, 214, 614) forment un second condensateur de couplage (423).

6. Agencement de récipient (100, 200, 300, 400, 600) selon l'une des précédentes,
où
- le transpondeur (124, 224, 324, 424, 624) comprend au moins une mémoire lisible,
- où au moins un identifiant de couvercle et/ou un identifiant de type de couvercle est/sont stocké(s) dans la mémoire.

7. Agencement de récipient (100, 200, 300, 400, 600) selon l'une des précédentes,
où
- l'agencement de récipient (100, 200, 300, 400, 600) comprend au moins un accessoire pouvant être couplé à l'élément de réception de nourriture (102, 202, 302, 402, 602) et/ou au couvercle (104, 204, 304, 404, 604),
- où l'accessoire comprend au moins un transpondeur d'accessoire.

8. Agencement de récipient (100, 200, 300, 400, 600) selon la revendication 7,
- le transpondeur d'accessoire est disposé au niveau de l'accessoire de telle sorte que, dans un état de couplage de l'accessoire avec le couvercle, le transpondeur d'accessoire soit à portée de l'antenne de lecture (106, 206, 306, 406, 606).

9. Agencement de récipient (100, 200, 300, 400, 600) selon l'une quelconque des revendications précédentes,
- où le premier contact de couvercle (108, 208, 308, 408, 608) et le deuxième contact de couvercle (110, 210, 310, 410, 610) sont disposés sur des côtés sensiblement opposés du bord du couvercle, et
- où le premier contact supérieur de pot (112, 212, 312, 612) et le deuxième contact supérieur de pot sont disposés sur des côtés sensiblement opposés du bord de pot (114, 214, 614).

10. Appareil de cuisine (230, 630), comprenant :
- un agencement de récipient (100, 200, 300, 400, 600) selon l'une quelconque des revendications précédentes, et
- un appareil de base (232, 632) comprenant une commande de lecture (126, 226, 626) couplée électriquement avec un premier contact de base (236, 636) et avec un deuxième contact de base (238, 638)
- où le premier contact de base (236, 636) peut être connecté électriquement au premier contact inférieur de pot (120, 220, 320, 620) et le deuxième contact de base (238, 638) peut être connecté électriquement au deuxième contact inférieur de pot (122, 222, 622).

11. Appareil de cuisine (230, 630) selon la revendication 10, où
- la commande de lecture (126, 226, 626) comprend un module d'évaluation (670) configuré pour détecter une position de fonctionnement du couvercle (104, 204, 304, 404, 604), sur la base du transpondeur lisible.

12. Appareil de cuisine (230, 630) selon la revendication 10 ou 11, où
- le module d'évaluation (670) est configuré pour déterminer le type de couvercle, sur la base d'une identification de couvercle et/ou d'une identification de type de couvercle obtenue.

13. Appareil de cuisine (230, 630) selon l'une quelconque des revendications 10 à 12,
où
- l'appareil de base (232, 632) comprend un réseau de filtrage et d'adaptation (240, 640) disposé entre la commande de lecture (126, 226, 626) et le premier contact de base (236, 636) et le deuxième contact de base (238, 638).

14. Appareil de cuisine (230, 630) selon l'une quelconque des revendications 11 à 13,
où
- l'appareil de base (232, 632) comprend un module de validation (672) configuré pour valider une fonction d'appareil de l'appareil de cuisine (230, 630) uniquement lors d'une détection de la position de fonctionnement du couvercle (104, 204, 304, 404, 604).

15. Procédé pour déterminer une position de fonctionnement d'un couvercle (104, 204, 304, 404, 604) dans un arrangement de récipient (100, 200, 300, 400, 600) selon l'une quelconque des revendications 1 à 9, comprenant:
- détecter, par une commande de lecture (126, 226, 626), la position de fonctionnement du couvercle (104, 204, 304, 404, 604) sur la base du transpondeur lisible.
